# EUROPEAN PATENT SPECIFICATION

(11) **EP 1 208 432 B1**
(45) Date of publication and mention of the grant of the patent: **24.11.2004**
(21) Application number: 00943318.6
(22) Date of filing: 29.06.2000
(51) Int. Cl.: G06F 11/14

(54) **SYSTEM AND METHOD FOR LOGGING TRANSACTION RECORDS IN A COMPUTER SYSTEM**
VERFAHREN UND VORRICHTUNG ZUM UNTERSUCHEN VON TRANSAKTIONSAUFZEICHNUNGEN IN EINEM RECHNERSYSTEM
SYSTEME ET PROCEDE DE JOURNALISATION DES ARTICLES DE TRANSACTIONS DANS UN SYSTEME INFORMATIQUE

(30) Priority: 30.06.1999 US 345698; 30.06.1999 US 141758 P; 30.06.1999 US 345699; 30.06.1999 US 141762 P
(43) Date of publication of application: 29.05.2002
(73) Proprietor: Computer Science Corporation, Austin, TX 78759 (US)
(72) Inventor: KERULIS, John, Little Elm, TX 75068 (US); NGAN, Robert, Chicago, IL 60611 (US); RASMUSSEN, Jay, Coppell, TX 75019 (US); RITTENHOUSE, Brian, Frisco, TX 75035-6321 (US); BARTLETT, James, Arlington, TX 76014 (US)
(74) Representative: Casalonga, Axel
(86) International application number: PCT/US2000/018020
(87) International publication number: WO 2001/001250

(56) References cited:
- EP-A- 0 280 773
- EP-A- 0 465 018
- US-A- 4 878 167
- US-A- 5 638 508
- US-A- 5 907 848

## Description

### BACKGROUND OF THE INVENTION

### 1. Field of the Invention

The present invention generally relates to the logging of transaction records in a computer system. More particularly, the present invention relates to the logging of transaction records in large-scale transaction-based computer application programs.

### 2. Description of the Related Art

In a transaction-based computer program, it is often advantageous to record the steps in a transaction in records, and to write the records to a file on non-volatile storage. The process of generating the records and writing them to a file may be commonly called logging, event logging, or transaction logging. The file on non-volatile storage may be commonly called a log file. The records are commonly written to the log file as soon as they are created. As used herein, a "transaction" may include a series of instructions executed by a computer system for carrying out a financial operation. A transaction may include multiple steps, and each step may produce one or more records written to the log file. Examples of transactions include, but are not limited to, financial transactions such as deposits, withdrawals, and funds transfers between accounts. Examples of the contents of records in a transaction include, but are not limited to, account numbers, deposit amounts, account balances, interest rates and calculations. In addition, each record may include the time the transaction began, and the time the record was generated. Other fields may be included in a record. The fields may include, but are not limited to, a field indicating which program or program module generated the record, and a field indicating which business unit initiated the transaction. As used herein, a "log file" may include information relating to transactions which is stored in memory and which may be structured into fields, records, and/or other suitable data structures.

It may be necessary to periodically unload transaction log records from a log file. One reason for the periodic unloading is that transaction log files may grow rapidly, especially in a large-scale transaction-based application where applications on several servers may be writing records to the log files, so it may be necessary to reduce the size of the log files. Another reason for the periodic unloading is that the transaction log records may require periodic processing for business purposes, such as for account balancing in a financial application. The log file unloading may occur at periodic intervals ranging from every few minutes to every few days. As used herein, a "logger unload program" is a computer program that unloads information relating to transactions from a log file.

A demand for processing performance and scalability greater than that provided by single- and multiprocessor systems led to the development of clusters. In general, a cluster is a group of servers that may share resources and cooperate in processing. One type of cluster is the single-system image cluster. The servers in a single-system image cluster appear as one logical system to clients and to application programs running on the cluster, hence the name "single-system." Single-system image clusters typically share external, non-volatile data storage, such as disk drives. Databases and other types of data permanently reside on the external storage. The servers, however, do not generally share volatile memory. Each server in the cluster operates in a dedicated local memory space.
Copies of a program may run concurrently on several servers in the cluster. The workload may be dynamically distributed among the servers. The copies of the programs may appear as one logical program to the client. All servers in the cluster have access to all of the data stored in external storage, and a program running on any server in the cluster may run any transaction.

The single-system image cluster solves the availability and scalability problems and adds a level of stability by the use of redundant systems with no single points of failure. Effectively, the one logical system may be available year-round to clients and application programs without any outages. Hardware and software maintenance and upgrades may be performed without the loss of availability of the cluster and with little or no impact to active programs. The combination of availability, scalability, processing capability, and the logical system image make the single-system image cluster a powerful environment on which to base a large-scale transaction-based enterprise server.

A single-system image cluster may include at least one Coupling Facility (CF) which provides hardware and software support for the cluster's data sharing functions. The single-system image cluster may also provide a timer facility to maintain time synchronization among the servers. On such a system, several operating system images such as MVS images may be running on at least one computer system. MVS and OS/390 are examples of mainframe operating systems. OS/390 is a newer version of the MVS operating system, and the terms OS/390 and MVS are used interchangeably herein. "MVS image" is used synonymously with "server" herein. Operating systems other than MVS may also run as servers on a single-system image cluster. Each server is allocated its own local memory space. The servers appear as one logical server to a client. Programs may be duplicated in the memory space of several servers. The workload of a program may be divided among several copies of the program running on different servers. As in the case with the multiple servers appearing as one logical server, multiple copies of a program running on a single-system image cluster may appear as one logical program to the client. Mainframe operating systems often include a logging utility to provide a common, centralized logging function to programs running on a computer system.

A common event in a transaction-based computer program is the aborting of a transaction. As used herein, "aborting" includes terminating a transaction before all of the steps of the transaction have been executed. If transactions are being logged, several log records for the transaction may have been stored in a log file at the time of the abort. Leaving the log records for an aborted transaction in a log file may cause problems in the processing of the transactions after they are unloaded from the log file. For example, in a banking application, a bank may attempt to transfer funds from one account to another through an intermediate account. The transaction may first withdraw the funds from a first account generating a log record, put the funds in the second account generating a log record, and then attempt to transfer the funds to the third account. Finding the third account closed, the desired action may be to abort the entire transaction and leave the funds in the first account. The existence of a withdrawal log record and a deposit log record for an aborted transaction in the log file may be problematic for programs processing transaction log records from a log file.

It is therefore desirable to provide a method for indicating a completion status for a transaction in transaction log records written to a log file for a large-scale transaction-based application. It is also desirable to provide a method for distinguishing between aborted and successfully completed transactions as the log records are processed.

Logging utilities provided by operating systems, such as MVS Logger and OS/390 logger, typically do not provide a method for indicating a completion status for transactions, and thus do not fully support transaction logging as described herein. The system-provided loggers do provide a common, centralized logging function with many useful features. It is therefore desirable that a method for indicating a completion status for a transaction in transaction log records written to a log file be applicable to logging utilities provided by operating systems, such as MVS Logger and OS/390 Logger.

The problem of aborted transactions may also occur in computer systems in general where a program or programs log transactions or events to log files. Therefore, a solution to the aborted transaction problem should preferably be applicable to computer programs in general as well as specifically to large-scale transaction-based applications. One solution to this problem is disclosed in US 4,878,167.

### SUMMARY OF THE INVENTION

The present invention, which is defined by the independent claims, provides various embodiments of an improved method and system for logging transaction records in a computer system. In one embodiment, the method may include writing a confirmation log record to the log file for a transaction that completes normally, and not writing a confirmation log record for transactions that are aborted. The log file may be unloaded periodically by an unload program. The unload program may write transaction log records accompanied by a confirmation log record to a good output file and transaction log records not accompanied by a confirmation log record to a suspended output file. On a subsequent execution, the unload program may combine the log records in the log file and the suspended file. The unload program may write transaction log records accompanied by a confirmation log record to a good output file. The unload program may write transaction log records not accompanied by a confirmation log record and which have not exceeded a transaction time limit to a suspended output file. The unload program may write transaction log records not accompanied by a confirmation log record and which have exceeded a transaction time limit to a disposal output file. The transaction log records in the good output file may then be processed normally by log processing programs.

In one embodiment, a transaction-based application program (hereinafter referred to as "the program") running on a server, may start a first transaction, and the first transaction may create a first transaction log record. The first transaction may also create a second transaction log record. The generated first and second transaction log records may be written to a log file immediately. In one embodiment, more than one program may be running on a server, the programs may be running transactions, and the transactions may be writing log records to a log file.

At some point, the program completes the first transaction. The program may generate a transaction confirmation log record for the first transaction and write the confirmation log record to the log file. The program may then start a second transaction. The second transaction may generate a first transaction log record and a second transaction log record, and the transaction log records may be written to the log file. The program may also start a third transaction, and the third transaction may generate a first transaction log record and the transaction log record may be written to the log file.

Periodically, an unload program unloads the log file. The unload program may collect all of a transaction's log records from the log file and examine the records to see if a transaction confirmation log record exists for the transaction. The unload program may examine the first transaction log records, find the log records for the first transaction, and also find the transaction confirmation log record generated for the first transaction. The unload program may write the first transaction log records to an output file for completed transaction log records. The unload program may also examine the second transaction log records, finding the log records generated so far for the second transaction, but not finding a transaction confirmation log record for the second transaction. The unload program may write the second transaction log records to a suspended file for uncompleted transaction log records. The unload program may also examine the third transaction log records, finding the log record generated so far for the third transaction, but not finding a transaction confirmation log record for the third transaction. The unload program may write the third transaction log records to a suspended file for uncompleted transaction log records. At this point, the unload of the log file has completed.

At some point, the program completes the second transaction. The program may generate a transaction confirmation log record for the second transaction and write it to the log file. The third transaction may generate a second transaction log record and write it to the log file.

At some point, the unload program begins the periodic unloading of the entries made in the log file since the last unload, and the entries made in the suspended file during the last unload. The unload program may collect all of a transaction's log records from the log file and the suspended file and examine the records to see if a transaction confirmation log record exists for the transaction. The unload program may examine the second transaction log records, finding the log records generated for the second transaction, and also finding the transaction confirmation log record generated for the second program. The unload program may write the second transaction log records to the output file for completed transaction log records. The unload program may also examine the third transaction log records, find the log records generated so far for the third transaction, but not find a transaction confirmation log record for the third transaction.

The unload program may further examine transaction log records that do not include a transaction confirmation log record. The unload program may examine the time stamp for the transaction log records. The time stamp may be the start time of the transaction that created the transaction log records. The unload program may calculate the elapsed time of a transaction by subtracting the start time of the transaction from the current system time read from a system clock. The calculated elapsed time of the transaction may be compared to a transaction time limit.

The unload program may examine the third transaction log records, calculate the elapsed time of the third transaction, and compare the elapsed time to a transaction time limit. The unload program may assume that transaction log records that do not have an accompanying confirmation log record, and for which the transaction elapsed time has exceeded the transaction time limit, are transaction log records for a transaction that has been aborted. Aborted transaction log records are written to a transaction log record disposal file. Finding that the third transaction has not exceeded the transaction time limit, the unload program may write the third transaction log records to a suspended file for uncompleted transaction log records. At this point the unload of the log file and suspended file has completed.

At some point, the program aborts the third transaction. Significantly, no transaction confirmation log record is written for the third transaction.

At some point, the unload program begins the periodic unloading of the entries made in the log file since the last unload, and the entries made in the suspended file during previous unloads. The unload program may collect all of a transaction's log records from the log file and the suspended file and examine the records to see if a transaction confirmation log record exists for the transaction. The unload program may examine a transaction's log records and find a transaction confirmation log record. The unload program may write the transaction log records to the output file for completed transaction log records. The unload program may also examine the third transaction log records, find the log record generated for the third transaction that were in the suspended file, but not find a transaction confirmation log record for the third transaction.

The unload program may further examine transaction log records that do not include a transaction confirmation log record. The unload program may examine the third transaction log records, calculate the elapsed time of the third transaction, and compare the elapsed time to a transaction time limit. The unload program may assume that transaction log records that do not have an accompanying confirmation log record, and for which the transaction elapsed time has exceeded the transaction time limit, are transaction log records for a transaction that has been aborted. Finding that the third transaction has exceeded the transaction time limit, the unload program may write the third transaction log records to a disposal file for aborted transaction log records. The unload program may write the transaction log records of transactions that have not exceeded the transaction time limit to a suspended file for uncompleted transaction log records. At this point the unload of the log file and suspended file has completed.

One advantage of the method described herein, including writing a confirmation log record for a successfully completed transaction and not writing a confirmation log record for an aborted transaction, is that the confirmation log record provides positive evidence that a transaction has successfully completed during processing of a log file. Another advantage is that the method may be used with logger utilities provided with operating systems, such as MVS Logger and OS/390 Logger. Yet another advantage is that the method may be applied in computer systems in general where programs perform event logging.

### BRIEF DESCRIPTION OF THE DRAWINGS

Figure 1 illustrates a server in which programs send log records to a logger module;
Figure 2 illustrates a server with programs sending log records with end records to a logger module according to one embodiment;
Figure 3 illustrates a process of an unload module moving records from a log file to an output file;
Figure 4 illustrates an unload module reading a log file and moving records with end records to an output file and records without end records to a suspend file according to one embodiment;
Figure 5 illustrates an unload module reading a log file and a suspend file and moving records with end records to an output file, records without end records to a suspend file, and timed-out records to a dispose file according to one embodiment;
Figure 6 is a high-level block diagram of a single-system image cluster system;
Figure 7a is a flowchart illustrating a process of sorting transaction logs into different output categories according to one embodiment;
Figure 7b is a continuation of flowchart 7a;
Figure 7c is a continuation of flowchart 7b;
Figure 7d is a continuation of flowchart 7c.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, and alternatives falling within the scope of the present invention as defined by the appended claims.

### DETAILED DESCRIPTION OF THE DRAWINGS

The term "computer system" as used herein generally describes the hardware and software components that in combination allow the execution of computer programs. The computer programs may be stored in software, hardware, or a combination or software and hardware. A computer system's hardware generally includes a processor, memory media, and Input/Output (I/O) devices. As used herein, the term "processor" or "processing unit" generally describes the logic circuitry that responds to and processes the basic instructions that operate a computer system. The term "memory medium" includes an installation medium, e.g., a CD-ROM, or floppy disks; a volatile computer system memory such as DRAM, SRAM, EDO RAM, Rambus RAM, etc.; or a non-volatile memory such as optical storage or a magnetic medium, e.g., a hard drive. The memory medium may comprise other types of memory or combinations thereof. In addition, the memory medium may be located in a first computer in which the programs are executed, or may be located in a second computer connected to the first computer over a network. The term "memory" is used synonymously with "memory medium" herein. A computer system also generally includes a system clock to provide the current time to programs.

A computer system's software generally includes at least one operating system, a specialized software program that manages and provides services to other software programs on the computer system. Software may also include one or more programs to perform various tasks on the computer system and various forms of data to be used by the operating system or other programs on the computer system. The data may include but are not limited to databases, text files, and graphics files. A computer system's software generally is stored in non-volatile memory or on an installation medium. A program may be copied into a volatile memory when running on the computer system. Data may be read into volatile memory as required by a program. Some operating systems may include a logging utility to provide a common, centralized logging function to programs running on a computer system.

A computer system may comprise more than one operating system. When there is more than one operating system, resources such as volatile and non-volatile memory, installation media, and processor time may be shared among the operating systems, or specific resources may be exclusively assigned to an operating system. For example, each operating system may be exclusively allocated a region of volatile memory. The region of volatile memory may be referred to as a "partition" or "memory space." A combination of an operating system and assigned or shared resources on a computer system may be referred to as a "server." A computer system thus may include one or more servers.

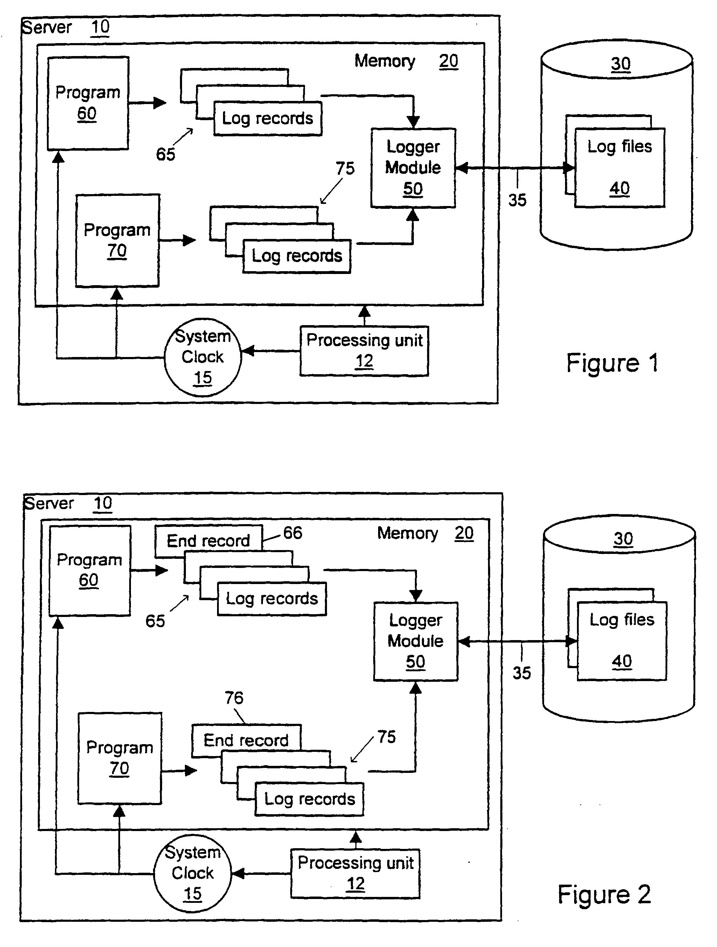

### Figure 1 - A server in which programs send log records to a logger module

Figure 1 illustrates a server 10 including a system memory 20 connected to a data storage 30 by a data bus 35, a system clock 15, and a processing unit 12 connected to system memory 20 and system clock 15. Processing unit 12 may include a single processor or several processors performing in parallel. Processing unit may be coupled to data storage 30 by a data bus. A log file 40 may be stored on the data storage 30 and may be maintained by logger module 50. A program 60 and a program 70, running on server 10, may run transactions that generate transaction log records 65 and 75. Program 60 and program 70 may send the log records to logger module 50, which then may write the transaction log records to log files 40. Programs 60 and 70 do not send a transaction log record indicating the end of a transaction to logger module 50. The system clock 15 may be used in generating the current time and/or creating time stamps for log records. As used herein, a "time stamp" is a record of the time at which part of a log file was written or a record of the time at which a transaction or a step in a transaction was generated.

### Figure 2 - A server with programs sending log records with end records to a logger module according to one embodiment

Figure 2 illustrates a server 10 including a system memory 20 connected to a data storage 30 by a data bus 35, a system clock 15, and a processing unit 12 connected to system memory 20 and system clock 15. Processing unit 12 may include a single processor or several processors performing in parallel. Processing unit may be coupled to data storage 30 by a data bus. A log file 40 may be stored on the data storage 30 and may be maintained by logger module 50. A program 60 running on server 10 may run a transaction that may generate a set of transaction log records 65. Program 60 may send the log records to logger module 50, which then may write the transaction log records 65 to log files 40. When the transaction generating transaction log records 65 ends in program 60, program 60 generates a transaction end record 66 and sends it to logger module 50. Logger module 50 then may write transaction end record 66 to log files 40. Similarly, a program 70 running on server 10 may run a transaction that may generate a set of transaction log records 75. Program 70 may send the log records to logger module 50, which then may write the transaction log records 75 to log files 40. When the transaction generating transaction log records 75 ends in program 60, program 60 generates a transaction end record 76 and sends it to logger module 50. Logger module 50 then may write transaction end record 76 to log files 40. The system clock 15 may be used in generating the current time and/or creating time stamps for log records.

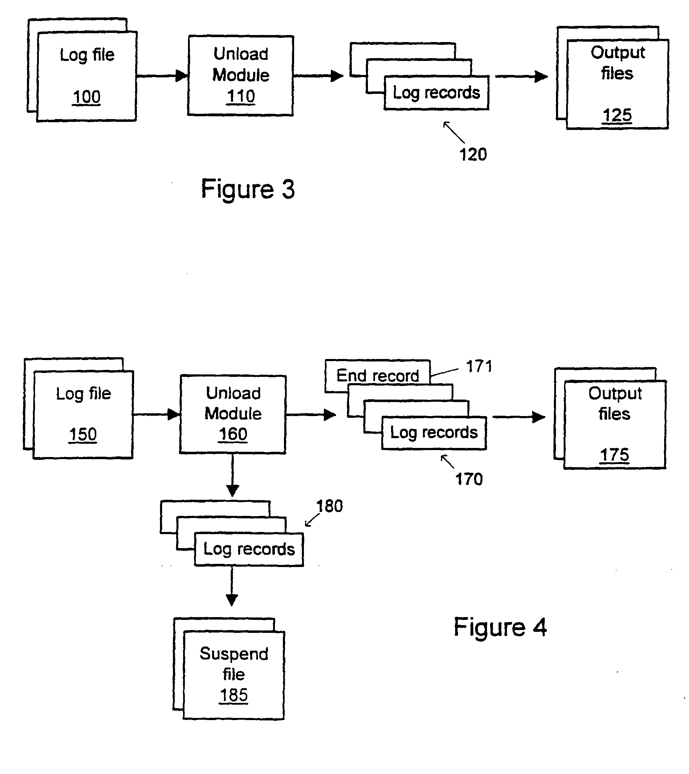

### Figure 3 - A process of an unload module moving records from a log file to an output file

Figure 3 illustrates an unload module 110 extracting transaction log records 120 from a log file 100 and moving them to an output file 125. Note that the unload module 110 has no mechanism for determining if transaction log records 120 is complete, so all of transaction log records 120 are moved into output files 125 Figure 4 - An unload module reading a log file and moving records with end records to an output file and records without end records to a suspend file according to one embodiment

Figure 4 illustrates an unload module 160 extracting transaction log records from a log file 150 and sorting the transaction log records based upon the presence of a transaction end record. Unload module 160 comprises a logger unload program. Unload module 160 may perform periodic unloading of log files on a computer system. At the time unload module 160 performs the unload of the records from log file 150, a transaction generating transaction log records 170 may have completed. A transaction end record 171 may have been generated in response to the completion of the transaction and written to the log file. A "transaction end record" is used herein as a synonym for a "completion record," i.e., a sequence of characters or binary data indicating that a transaction has completed. Unload module 160 may read one or more transaction records 170 from log file 150. Unload module 160 may then detect the transaction end record 171 and write the transaction records 170 to an output file 175 in response to detecting the transaction end record 171. In one embodiment, an unload module may dispose of a transaction end record after the transaction end record is used. In another embodiment, an unload module may send a transaction end record to an output file with the rest of the transaction records.

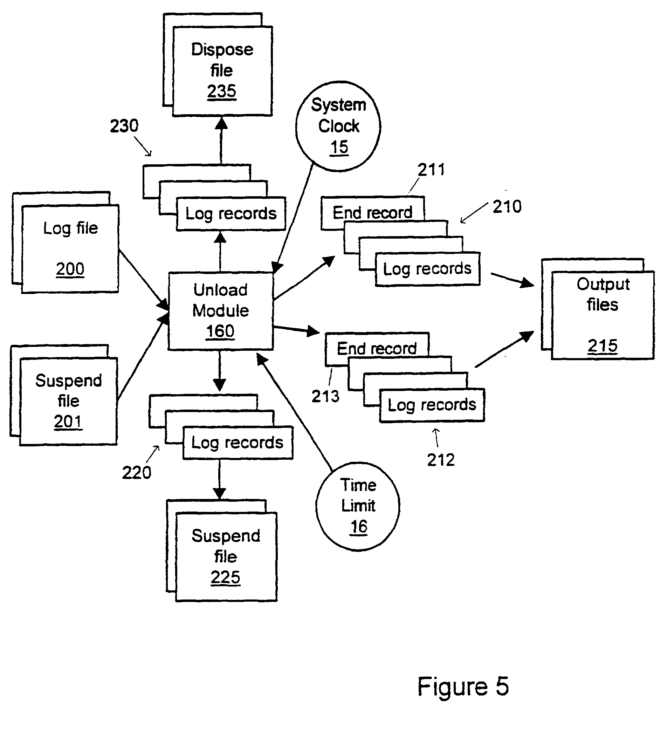

Unload module 160 also may read one or more transaction records 180 from log file 150. When all records in the log file 150 have been processed by unload module 160 and no transaction end record is found for transaction records 180, unload module 160 may write transaction records 180 to a suspend file 185. Figure 5 - An unload module reading a log file and a suspend file and moving records with end records to an output file, records without end records to a suspend file, and timed-out records to a dispose file according to one embodiment

Figure 5 illustrates an unload module 160 extracting transaction log records from a log file 200 and a suspend file 201 and sorting the transaction log records based upon the presence of a transaction end record and a time limit for incomplete transactions. At the time the unload module 160 performs the unload of the transaction log records from log file 200 and suspend file 201, a transaction generating transaction log records 210 may have completed. Transaction end record 211 may have been generated and written to log file 200 upon completion of the transaction. Another transaction may have started and written transaction log records 220 to log file 200. Transaction log records 212 and transaction log records 230 may have been written to a suspend file by an earlier unload of a log file by unload module 160. After the earlier unload, additional transaction log records 212 may have been written to log file 200, a transaction generating the transaction log records 212 may have completed, and transaction end record 213 may have been written to log file 200.

Unload module 160 may read one or more transaction records 210 from log file 200. Unload module 160 may then detect the transaction end record 211 and write the transaction records 210 to one of output files 215 in response to detecting the transaction end record 211. In this case, the output file is a completed transaction file. As used herein, a "completed transaction file" may include a file in memory which stores information relating to completed transactions. Output files may also include an uncompleted transaction file and an aborted transaction file. As used herein, an "uncompleted transaction file" may include a file in memory which stores information relating to uncompleted transactions. As used herein, an "aborted transaction file" may include a file in memory which stores information relating to aborted transactions. Unload module 160 may also read one or more transaction records 212 from suspend file 201 and one or more transaction records 212 including transaction end record 213 from log file 200. Unload module 160 may then detect the transaction end record 213 and write the transaction records 212 to one of output files 215 in response to detecting the transaction end record 213.

When all records in the log file 200 have been read by unload module 160, unload module 160 may examine transaction records that have no transaction end record associated with them. No transaction end record is found for transaction records 220 and 230. Unload module 160 may then examine transaction records 220 and determine that the transaction has not exceeded a transaction time limit 16. Unload module 160 may subtract a time stamp in transaction record 220 from the system time read from a system clock 15 to determine the transaction elapsed time. Unload module 160 may then write transaction records 220 to a suspend file 225. Unload module 160 may then examine transaction records 230 and determine that the transaction has exceeded the transaction time limit. Unload module 160 may then write transaction records 230 to a dispose file 235.

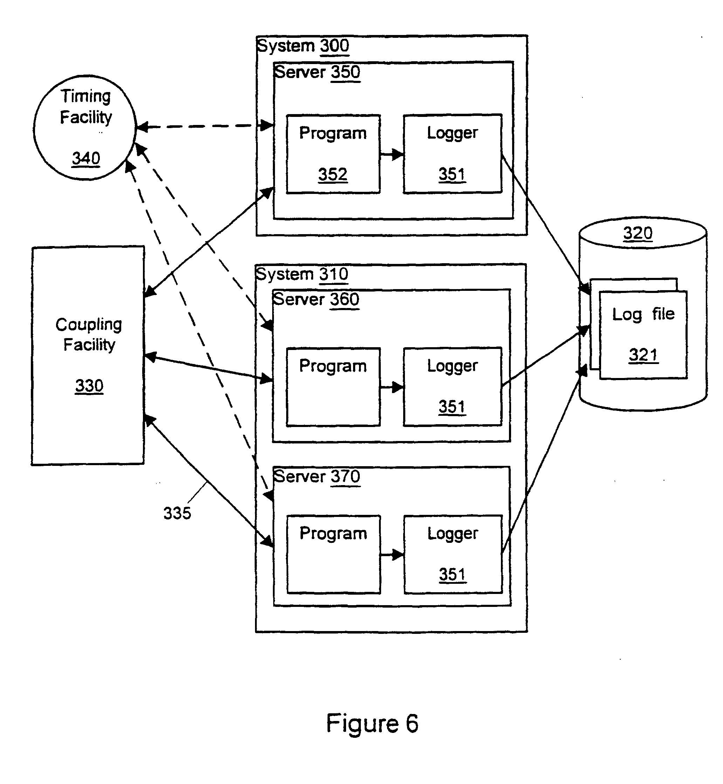

### Figure 6 - A high-level block diagram of a single-system image cluster system

Figure 6 illustrates an embodiment of a single-system image cluster system that is suitable for implementing the logging system and method as described herein. The system may include multiple systems (two systems, systems 300 and 310, are shown) running mainframe operating systems such as OS/390 or MVS operating systems; at least one coupling facility 330 to assist in multisystem data sharing functions, wherein the coupling facility 330 is physically connected to systems in the cluster with high-speed coupling links 335; a timer facility 340 to synchronize time functions among the servers; and various storage and I/O devices 320, such as DASD (Direct Access Storage Devices), tape drives, terminals, and printers, connected to the systems by data buses or other physical communication links.

Shown in system 300 is a server 350 running a mainframe operating system such as MVS. A logger 351 is shown running on server 350. The logger 351 accepts records to be logged from program 352 and writes them to a log file 321 shown on external storage. Also shown in system 310 is a system partitioned into more than one logical system or server (two servers, servers 360 and 370, both running a mainframe operating system such as MVS, are shown on system 310). Servers 360 and 370 may also have programs interfacing with a logger.

The single-system image cluster system provides dynamic workload balancing among the servers in the cluster. To a client working at a terminal or to an application program running on the cluster, the servers and other hardware and software in a single-system image cluster system appear as one logical system.

### Figures 7a-7d - A flowchart illustrating a process of sorting transaction logs into different output categories according to one embodiment

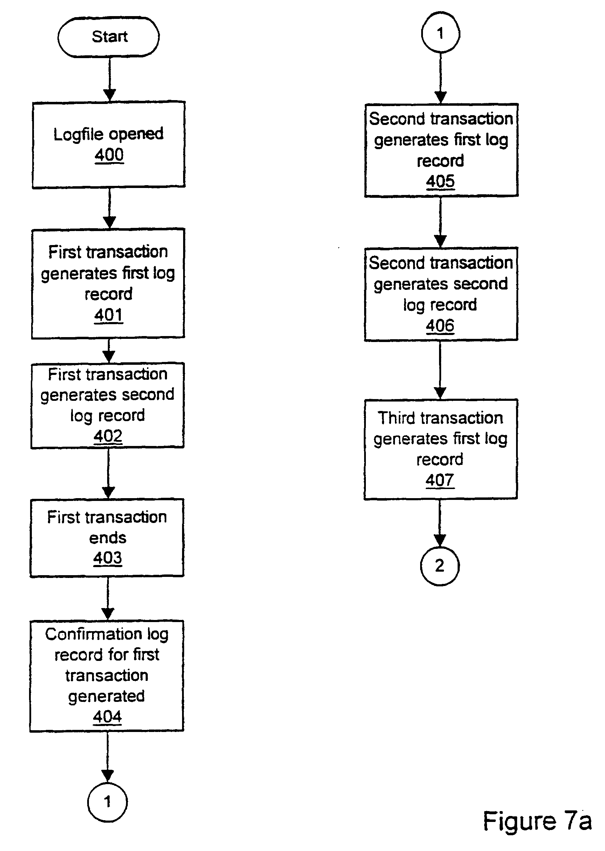

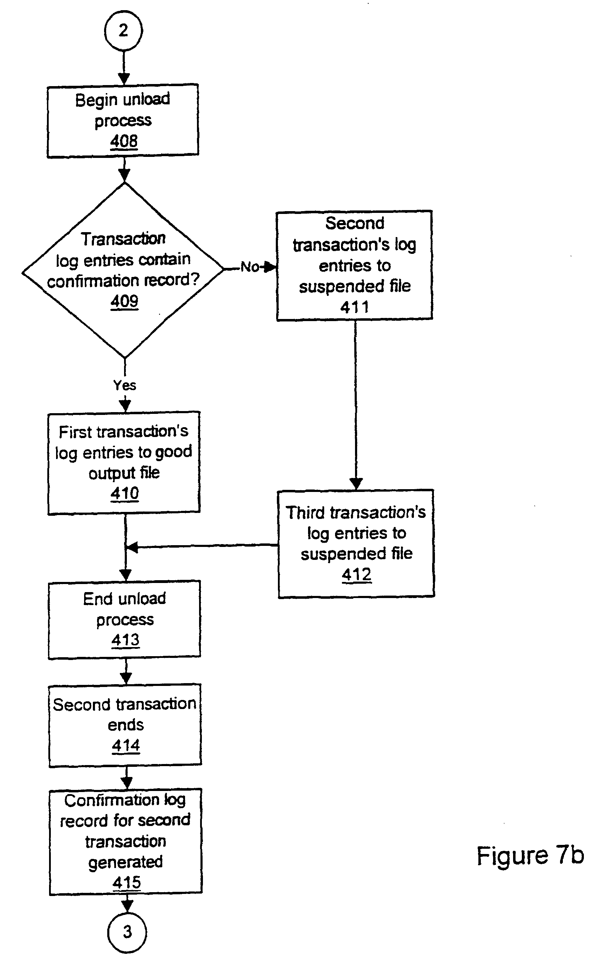

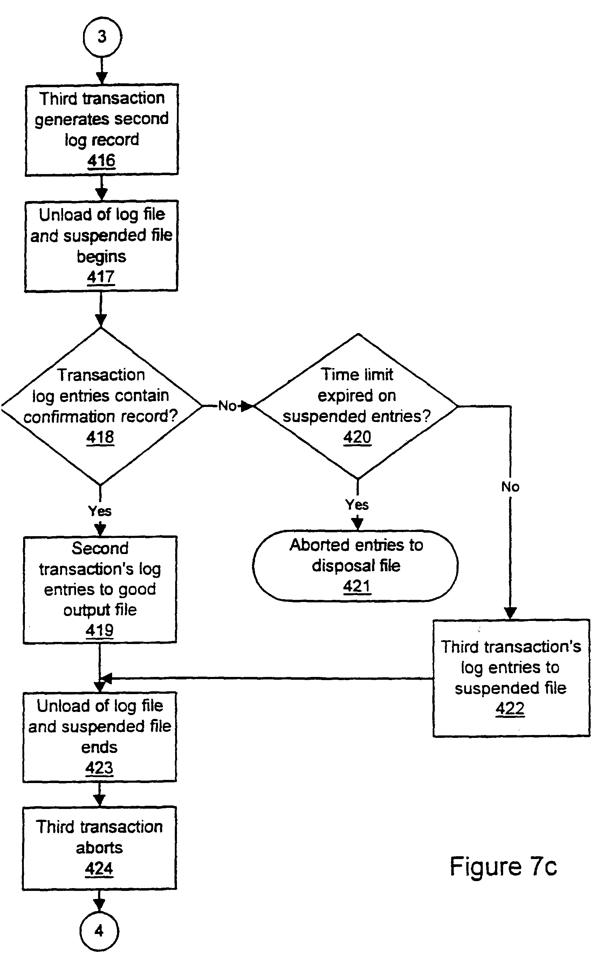

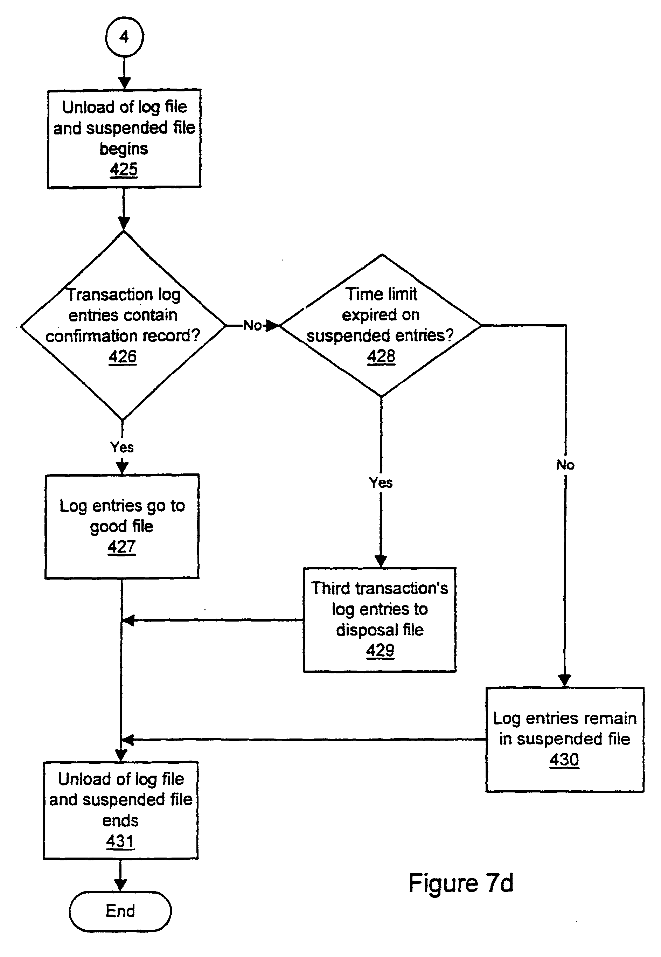

Figures 7a through 7d present a flowchart illustrating one embodiment of a method of transaction logging providing the ability to sort transaction logs into different output categories. The flowchart may describe a logging process similar to that shown in Figure 2. At step 400, a log file is opened. Opening a log file may include creating a new log file, or it may include opening a previously created log file. In one embodiment, the log file may be created on an external storage device such as a disk drive. In another embodiment, the log file may be created in a volatile memory and later written to a non-volatile storage. In one embodiment, an application program running on a server may create the log file. In another embodiment, a system logging utility may provide log file creation and maintenance to application programs running on the server. In yet another embodiment, a logger interface program may provide log file creation and maintenance to application programs, and may interface to a system logging utility. As used herein, a "logger interface program" includes a program which is configured to accept transactions generated by programs and send the transactions to a system logging utility.

At step 401, a first transaction generates a first transaction log record. At step 402, the first transaction generates a second transaction log record. In this flowchart, generating a transaction log record may include the creation of the transaction log record and writing the transaction log record to a log file. In one embodiment, a program may directly write a transaction log record to a log file. In another embodiment, a program may send a transaction log record to a logging program and the logging program may write the transaction log record to a log file. In yet another embodiment, a program may send a transaction log record to a system logging utility and the system logging utility may write the transaction log record to a log file. In one embodiment, a transaction may include a number of steps, wherein each step in the transaction may generate one or more transaction log records.

In step 403, the first transaction may complete. The program may generate a transaction confirmation log record for the first transaction in step 404. The terms transaction confirmation log record, transaction end record, and transaction completion record are synonymous as used herein. As used herein, a "transaction completion record" may include information, such as a sequence of characters or binary data, indicating that a transaction has completed. A second transaction may generate a first transaction log record in step 405, and a second transaction log record in step 406. In step 407, a third transaction may generate a first transaction log record.

In step 408, an unload program as illustrated in Figure 5 begins unloading the log file. In step 409, the unload program may collect all of a transaction's log records from the log file and examine the records to see if a transaction confirmation log record exists for the transaction. In step 409, the unload program may examine the first transaction log records, finding the log records generated in steps 401 and 402, and also finding the transaction confirmation log record generated in step 404. The unload program may write the first transaction log records to an output file for completed transaction log records in step 410. In one embodiment, all of a completed transaction's log records may be written to a completed transaction output file. In another embodiment, transaction confirmation log records are deleted after they are used to identify completed transactions and are not written to a completed transaction output file. In step 409, the unload program may also examine the second transaction log records, finding the log records generated in steps 405 and 406, but not finding a transaction confirmation log record. The unload program may write the second transaction log records to a suspended file for uncompleted transaction log records in step 411. In step 409, the unload program may also examine the third transaction log records, finding the log record generated in steps 407, but not finding a transaction confirmation log record. The unload program may write the third transaction log records to a suspended file for uncompleted transaction log records in step 412. In step 413, the unload of the log file is completed.

In step 414, the second transaction may complete. The program may generate a transaction confirmation log record for the second transaction in step 415. In step 416, the third transaction may generate a second transaction log record.

In step 417, the unload program begins unloading the entries made in the log file since the last unload, and the entries made in the suspended file during the last unload. In step 418, the unload program may collect all of a transaction's log records from the log file and the suspended file and examine the records to see if a transaction confirmation log record exists for the transaction. In step 418, the unload program may examine the second transaction log records, finding the log records generated in steps 405 and 406, and also finding the transaction confirmation log record generated in step 415. The unload program may write the second transaction log records to the output file for completed transaction log records in step 419. In step 418, the unload program may also examine the third transaction log records, find the log records generated in steps 407 and 416, but not find a transaction confirmation log record.

In step 420, the unload program may further examine a transaction's log records that do not include a transaction confirmation log record. In one embodiment, a transaction log record may include at least one time stamp. A transaction start time is one example of a time stamp, wherein a transaction start time may indicate the time at which a transaction was generated or written to a log file. In one embodiment of a transaction log record including a time stamp, the time stamp may be represented as a text representation of a year, month, day of the month, hour, minute, seconds, and fractions of seconds. In another embodiment of a transaction log record including a time stamp, the time stamp may be represented as a binary number, and the binary number may represent a number of fractions of a second since a system-determined base time. Other methods of representing a time stamp in a transaction log record will be obvious to one skilled in the art. In one embodiment, a transaction that generates transaction log records may use the start time of the transaction as a time stamp for transaction log records. In one embodiment, a time stamp used by a transaction may be unique for that transaction and may be used to uniquely identify the transaction. In step 420, the unload program may examine the time stamp for the transaction log records. The time stamp may be the start time of the transaction that generated the transaction log records. The unload program may calculate the elapsed time of a transaction by subtracting the start time of the transaction from the current system time read from a system clock (see Figure 5, item 15). The calculated elapsed time of the transaction may be compared to a transaction time limit (see Figure 5, item 16). In one embodiment, a transaction time limit for a transaction log record may be read from a program that generated the transaction log record. In another embodiment, a transaction time limit may be set in the unload program. In yet another embodiment, a transaction time limit may be entered by a user of the unload program before transaction log records in a log file and suspended file are processed.

In step 420, the unload program may examine the third transaction log records, calculate the elapsed time of the third transaction, and compare the elapsed time to a transaction time limit. In step 420, the unload program may assume that a transaction having transaction log records that do not have an accompanying confirmation log record, and for which the transaction elapsed time has exceeded the transaction time limit, has been aborted. Aborted transaction log records are written to a transaction log record disposal file in step 421. In one embodiment the disposal log file may be kept after the unload program completes. In another embodiment, the record disposal file is deleted by the unload program before the unload program completes. Finding that the third transaction has not exceeded the transaction time limit, the unload program may write the third transaction log records to a suspended file for uncompleted transaction log records in step 422. In step 423, the unload program finishes the unload of the log file and suspended file.

In step 424, the third transaction is aborted. No transaction confirmation log record is written for the third transaction.

In step 425, the unload program begins unloading the entries made in the log file since the last unload, and the entries made in the suspended file during previous unloads. In step 426, the unload program may collect all of a transaction's log records from the log file and the suspended file and examine the records to see if a transaction confirmation log record exists for the transaction. In step 427, the unload program may examine a transaction's log records and find a transaction confirmation log record. The unload program may write the transaction log records to the output file for completed transaction log records in step 427. In step 426, the unload program may also examine the third transaction log records, find the log record generated in steps 407 and 416, but not find a transaction confirmation log record.

In step 428, the unload program may further examine a transaction's log records that do not include a transaction confirmation log record. The unload program may examine the third transaction log records, calculate the elapsed time of the third transaction, and compare the elapsed time to a transaction time limit. In step 420, the unload program may assume that a transaction having transaction log records that do not have an accompanying confirmation log record, and for which the transaction elapsed time has exceeded the transaction time limit, has been aborted. Finding that the third transaction has exceeded the transaction time limit, the unload program may write the third transaction log records to a disposal file for aborted transaction log records in step 429. The unload program may write the transaction log records of transactions that have not exceeded the transaction time limit to a suspended file for uncompleted transaction log records in step 430. In step 431, the unload program finishes the unload of the log file and suspended file.

Various embodiments further include receiving or storing instructions and/or data implemented in accordance with the foregoing description upon a carrier medium. Suitable carrier media include memory media or storage media such as magnetic or optical media, e.g., disk or CD-ROM, as well as signals such as electrical, electromagnetic, or digital signals, conveyed via a communication medium such as networks and/or a wireless link.

### Additional Information

For several years, there has been a generalized high-speed logging facility to ease migration of all applications to a true 24 / 7 environment. The logging facility may provide multiple physical files and the ability to switch physical logs for batch off-load with no application interrupts. It may also provide a flexible and extendable unload by source, target, or time of the logged transaction. While the logging facility provides fast efficient logging, some operational issues have always proved troublesome to clients. The OS/390 System Logger provided as part of OS/390 would remove or ease these issues. However, it is not RECOVERABLE and does not provide any flexible unload facilities.

Any significant production use of the MVS Logger by any sysplex-exploiting system may tend to require either a non-volatile coupling facility (for example, UPS on CPU running the CF) or dual CFs to ensure integrity of the logged data within the CF. Numerous Log streams may exist on one MVS Logger List structure. As the characteristics (Maximum buffer size and Maximum allocation) of a List are fixed, and the resources represented by a List are evenly divided among all logstreams using a list, an important tuning is to correctly assign various MVS Logs to List structures.

Use of the MVS Logger may vastly ease the scheduling of log offloads required before batch processing. While an unload job must still be run, in one embodiment, it need be run only once regardless of the number of MVS images or processing regions. In one embodiment, the first step unloads the MVS Log, both the data contained in VSAM Linear Data Sets and the data from within the CF, to a sequential format. Subsequent steps are unchanged and data may be extracted using any supported criteria.

The ability to unload data without any requirement to schedule the LOG SWITCH transactions required by earlier logging facilities provides the opportunity to more tightly schedule unloads before batch.

Use of the MVS logger may tend to require correctly sizing the Structure used to house the Logstreams and the Logstreams themselves. As a Policy may contain only 128 structures, not every logstream may have its own structure.

Several changes may be recommended to implement an MVS Log. Additional Logs may reuse the Log List Structure or create their own as required. To size a List Structure, the maximum and average buffer sizes may be required. For each Logstream, the Low and High off-load percent, the number of writes per second, and the required residency time of data in the log may be required. A utility provides the sizing for Policy Definition.

Programs may have a built-in online and/or batch Logging facility of some type. This Logging facility collects various types of data, such as online transactions for batch processing, and audit/reporting information. Each of these facilities may be specifically designed for the processing application and uses unique logging data sets. In most cases, the log data sets are keyed index files that add considerable overhead to transaction processing in both online and batch environments. Additionally, the online log data sets may tend to require special processing measures to accommodate offline processing, or in some cases to interrupt online processing. Therefore, log data sets have caused significant concern from an application processing perspective, despite the fact that they perform the required functions.

Consequently, a new logging facility was conceived to resolve the application concerns created by existing log facilities. The log service may provide a generalized logging facility for Umbrella-based applications that improves logging performance and
increases online log file availability. In various embodiments, the requirements for individual application log files can be eliminated. A single set of log files can be utilized without internal application modifications. The log files can accommodate any application log record format and can provide continuous online log availability. This facility may deliver enhanced application logging capabilities for existing and future applications.

Additionally, the Logging facility service may provide offline processing services that can be tailored for each application. A batch log utility may provide the ability for batch processing to unload, warehouse, and split out the individual application log records. Basic and customized record selection capabilities may be available through this utility to enhance batch processing flexibility.

In one embodiment, the basic function of the logging process is to intercept online I/O requests made to application log files and reroute them to the log file. Multiple log files are supported, with manual and automated switching capabilities. The logging facility service may be available in the online and batch environment, for both IMS and CICS. However, due to the environmental differences, the log file's physical structure and access method may vary.

In one embodiment, for IMS, the log file includes Fast Path Data Entry Databases (DEDB) with the individual log records being Sequential Dependent Segments (SDEPs). DEDBs are designed to provide efficient storage for large-volume data accessing, and offer high levels of availability through the use of area data sets. SDEP segments, within a DEDB, are designed for very fast insert capabilities, making them ideal for online audit/log files. Also, DEDBs are recoverable through Database Resource Control (DBRC) in all IMS environments (for example, BMP, DC, and so on).

In one embodiment, for CICS, the log file includes VSAM Relative Record Data Set (RRDS) files. The advantages here are also the fast insert capabilities and CICS recoverability.

Using the system logger for the logging facility may allow a sysplex-wide sharing of a common repository for log data from any TP and/or environment and even for a combination of CICS, IMS, and batch systems. Each application file may have its own individual log stream or the data may be placed into a common log stream.

An additional performance feature is built into the online log service. A program can buffer up application log records, within a log record, and only perform the actual I/O at end of transaction. Consequently, a single log record may contain one or more actual application log records. This may reduce the number of I/Os performed and further improve transaction processing time.

The entire logging process may take place within a load module and require no application program modifications. However, some additional batch processing steps are required to remove the application log records from the log file and place them on the desired application log file. For this purpose, a log utility may be provided to split application log records off the log and place them on the original designated application files. This utility may provide basic record selection and a user exit point for further customization. In summary, this logging facility may provide improved online and batch logging performance, increased online log file availability, and flexible log record separation facility.

In one embodiment, ,the target database for an application write request is evaluated to determine if it is defined as an application log data set by examining the LOG FILE TYPE flag on the sequential database (SDB) or the Hierarchical Database (HDB) definition. If it is an application log file, the following steps may occurs. The application records for the transaction may be buffered. Output may be deferred until the end of transaction, or until the buffer's space is exceeded. Buffer space may be calculated as the number of buffers multiplied by the log buffer size. The buffer data may be identified by system header, application record header, data group header, and data group data. If the transaction I/O requests exceed the data set space allowance, an internal log switch may occur, and a new log file may be activated. The active Logging facility database may have concurrent accessibility through status information tabled in permanent data group 48634, the log control record. The address of this area may be stored in a Program Vector Table (PVT) field. Online regions under the same system CPU may share the Logging facility database set if the Common Storage Area (CSA) is active for the regions.

Activating the system logger feature may cause all records that would have been written to a Logging facility to be written to the system logger instead. With the system logger, a user may have the choice of using a single log stream to house all application records or individual log streams for each of the application files. The records may be written as they are received by the logger function. In one embodiment, there is no switching or stopping of the log streams required, and both batch and online may write to the same log streams. A new batch unload program may be used to read and delete the log streams. The output from this program may be used as input to the consolidate step of the Batch Log Processing utility.

In one embodiment, the basic batch logging flow may have several major differences from the online flow. For example, the batch log file may be a sequential database. The records that are written to the sequential log file may not be blocked and buffered for deferred output. Each application record may be written out at the time of the database request with a system, application, and data group header. The application records may be ready to be included directly into the batch utility split step. A single batch Log file may be utilized with no switching capability. No log file space evaluation may be performed.

In offline log processing, the Batch Log Processing utility may unload, consolidate, and split application data records to the application log file. Offline processing is recommended to be performed before exhausting all of the available online log files. A file may become available for offline processing through Logging facility service internal switching, or through the explicit online switch transaction. To become available for online processing again, the log file is recommended to be unloaded and reinitialized.

In one embodiment, the steps that occur to split application records to the application log file from the time the active log file may be taken offline. First, a Batch Log Processing utility may assesse which Log files may be available for offline processing. The offline log files may be unloaded to a flat sequential file. The log buffer may be broken into one application record per output buffer and consolidated with the warehouse consolidated log file, if one exists. The consolidated records may be split, based on any selection criteria, to the target application log files. The split records, by default, may not be written to the newly-created warehouse log file, to prevent duplicate processing.

In one embodiment, the system logger may utilize a different program to unload data from the system logger data sets. The output from this program may be used as input to the Batch Log Processing utility for consolidation or splitting into individual application log streams. This unload program may also delete the accumulated records from the log stream.

In one embodiment, implementing logging using the system logger may tend to require an active system logger within the sysplex. Among the items to be considered before using the system logger for logs are the number and location of coupling facility structures, the number of log streams required, mapping of log streams to coupling facilities, sizing of each coupling facility structure, DASD requirements for each log stream, and proper security authorization to access the system logger. If the data being logged is of a critical nature (audit data, for example), then duplexing of the data is recommended.

A batch utility may be provided to extract and process the records that were written to the Logging facility during online or batch processing. This utility may perform a plurality of functions, which are described as follows. The utility may unload the Log file(s). This stand alone step reads the log(s) and writes the records to a sequential file. Depending on the environment in which it is executing, it may also delete the records just read. Each environment requires a unique procedure for unloading the records and is described in the following sections. The utility may consolidate unloaded records. The records just unloaded may be combined with previously unloaded records to form a single repository for later processing by the split or purge functions of this utility. The utility may split warehoused records. The consolidated records may be split into their respective application files based on criteria specified with control statements. The utility may purge warehoused records. Based on control statements, records may be deleted.

In one embodiment, the Batch Split utility step to unload the VSAM RRDS log files may include querying each Log file to determine which files require unload processing, and then dumping the targeted records to a flat sequential file. The file may be flagged as unloaded. The file may not be available for online processing until it is reinitialized. The Initialize VSAM Database utility may delete the records from the unloaded log file, and flags the file as available for online processing. In one embodiment, it may not be necessary to run this step in the same job as the batch unload step, but the Logging facility may not recognize the unloaded file as available until it has been run.

A batch utility may consolidate the previously unloaded application records with records from a warehoused records sequential file. The warehoused record file may include a collection of application records collected from previous unload steps. In one embodiment, it is not a required data set, and it may be bypassed by using DUMMY as the Data Set Name (DSN) for DD SEQLOGI. If using a warehouse file, it is recommended that the files be created as Generation Data Group (GDG) data sets.

A batch utility may split the consolidated application log records to the original application log files. An example uses the optional selection criteria control cards to select only those log files destined for database names prefixed with a particular name. In one embodiment, these application databases are online application log databases that were specified on the original HDB activity. The application records that are selected and split to the application databases may be purged from the new warehouse sequential log file. The HDB activities captured with the application log records may be issued to split the application records to the application databases.

In one embodiment, to write records directly to an application database defined as an application log file, logging should be disabled. To process records directly in batch from an application database defined as a log file, logging should also be disabled. In one embodiment, there are two methods for disabling the logging facility for specific programs or transactions. First, a logging flag can be set to N within an application program. Second, for batch, the bypass logging transaction can be executed before the transaction(s) performing the logging.

In one embodiment, ,setting the logging flag in the UTCB may temporarily disable logging for the duration of the transaction or until the flag is reset. However, if a more permanent system-wide disabling is desired, a global variable may be set to disable logging. This may disable the Logging facility service for all application log files in the environment.

Each log record, passing the initial selection criteria, may be manipulated before the SPLIT processing is performed. Once an application log record passes the initial selection criteria, the data contained in the log record may be placed back into the originating data groups (i.e., the data groups where the data was obtained during the online logging process). Additionally, the Log file Header and the Application Record Header information is also available. Once the application log record information is in the appropriate data groups, the supplied activity may be invoked. Upon return to the Log Utility, a determination may be made as to whether SPLIT and/or PURGE processing continues against the application record.

Consequently, the data group being passed to the exit module may be based upon the data groups of the databases being processed. To access these data groups, the exit module may need only to specify them on the program definition and in the appropriate area within the source module.

In one embodiment, the Log file Header and the Application Record Header information may be available and may all be specified in the user exit module. The result field can be used to communicate to the Log Utility that SPLIT process is to be bypassed. Upon return to the Log Utility, the result field is interrogated for a nonzero value. If the value of this field is nonzero, the Log Utility may bypass both the SPLIT and PURGE processes.

In one embodiment, the existing Logging facility has received a heart transplant by using the OS/390 System Logger as the transport layer replacing the VSAM RRDS or IMS/DEDB w/SDEP used in prior releases. This may provide a very high-speed, flexible logging tool that addresses substantially all the operational problems experienced with the original Logging facility. In one embodiment, all log streams and their supporting CF List structures must be defined via standard utilities.

Once MVS LOG support is active, the logging facility may be switched from its internal log structures to the system logger. The most noticeable change may be in the processing required to unload the system logger with integrity.

The unload program may process records written to the system logger. These records may have been written to the system logger by online and/or batch systems. As this unload may be an asynchronous process with the jobs that are still writing to the logger and because the logger function is a non-recoverable resource (that is, no backout is performed), specialized processing may be required. Records written to the log may be grouped by transaction. Every record written during the life of a program transaction may have the same key. At the end of a transaction, a control record may be written with the same key and an identifier that indicates that the record set is valid (that is, the transaction did not abend).

In one embodiment, multiple address spaces may be writing to the logger at the same time so records are interspersed (do not have a set grouping). As these logging processes may be continuing during the unload, the unload program may read valid records that do not yet have a matching control record. The basic logic of this program may include: getting the log stream to be unloaded; getting warehoused records that did not have a matching control record during the last execution of this job (this data set does not exist on the very first execution of this job) and passing these records to sort; reading all the records on the specified log stream and passing them to sort; sorting the records so that they are grouped by transaction key with the control record, if any, sorting first; and reading the records from sort. If there is a matching control record, the logic of the program may further include writing all the records with the same transaction key to SEQLOGO. If a record does not have a matching control record, then, if the record is more than I hour and I I minutes old, it may be written to a reject file because it is probably the result of a transaction that abended and did not write a control record. Otherwise, it may be written to SYSLOGO, the warehouse file. The records may then be deleted from the system logger.

In one embodiment, the implementation of the MVS System Logger may be thought of as a "heart transplant" into the logging facility. The transport layer of the logging facility may be replaced by the System Logger. Additional functionality may be provided by allowing any application to designate SDB/HDB as a pure System Log.

## Claims

1. A method comprising:
writing a first transaction to a log file (40);
completing the first transaction;
writing a completion record for the first transaction to the log file (40), wherein the completion record indicates that the first transaction has completed;
writing a second transaction to the log file (40);
reading the completed first transaction from the log file (40);
reading the second transaction from the log file (40);
writing the completed first transaction to a completed transaction file;
writing the second transaction to an uncompleted transaction file;
completing the second transaction;
writing a completion record for the second transaction to the log file (40), wherein the completion record indicates that the second transaction has completed;
**characterized in that** the method further comprises:
reading contents of the log file (40) and contents of the uncompleted transaction file, wherein the contents of the log file (40) include the completion record for the second transaction, and wherein the contents of the uncompleted transaction file include the second transaction;
determining that the second transaction from the uncompleted transaction file corresponds to the completion record for the second transaction from the log file (40); and
writing the completed second transaction to the completed transaction file in response to determining that the second transaction from the uncompleted transaction file corresponds to the completion record for the second transaction from the log file (40).

2. The method of claim 1, further comprising:
providing a transaction time limit for transactions, wherein the transaction time limit indicates a time by which the transaction must complete to be valid;
providing a current time;
writing a third transaction to the log file (40), wherein the third transaction includes a transaction start time, wherein the transaction start time indicates a time at which the third transaction began;
reading contents of the log file (40) and contents of the uncompleted transaction file;
calculating a transaction elapsed time for the third transaction by subtracting the current time from the transaction start time;
comparing the transaction elapsed time of the third transaction to the transaction time limit; and
writing the third transaction to an aborted transaction file when the transaction elapsed time of the third transaction has exceeded the transaction time limit.

3. The method of claim 1, wherein each transaction comprises at least one transaction record, and wherein a transaction record comprises at least one field.

4. The method of claim 3, wherein each transaction record further comprises an identifier field, wherein the identifier field is unique to the transaction, such that the identifier field uniquely identifies a transaction record as belonging to a particular transaction, and such that the identifier field is used to distinguish the particular transaction from other transactions.

5. The method of claim 4, wherein each transaction record further comprises a time field, wherein the time field comprises a time stamp.

6. The method of claim 5, wherein the identifier field is the time field, wherein the time stamp is a time at which the transaction was started.

7. The method of claim 6, wherein one transaction record is a completion record comprising a time field and a transaction complete field, wherein the transaction complete field includes information identifying a record as a completion record.

8. The method of claim 1, wherein each transaction includes a program identifier, wherein the program identifier is a unique piece of data that indicates which program of a plurality of programs generated the transaction.

9. The method of claim 8, wherein a logger interface program is configured to accept transactions generated by programs and send the transactions to a system logger.

10. The method of claim 9, wherein the system logger is a component of an operating system.

11. The method of claim 10, further comprising:
the logger interface program receiving the first transaction from a first program;
the logger interface program sending the first transaction to the system logger;
the logger interface program receiving the second transaction from a second program;
the logger interface program sending the second transaction to the system logger.

12. The method of claim 11, wherein the logger interface program is executable by a mainframe computer system.

13. The method of claim 1,
wherein reading transactions from the log file (40) further comprises a logger unload program reading transactions from the log file (40);
wherein writing the completed first transaction to a completed transaction file further comprises the logger unload program writing the completed first transaction to a completed transaction file; and
wherein writing the second transaction to an uncompleted transaction file further comprises the logger unload program writing the second transaction to an uncompleted transaction file.

14. The method of claim 13,:
wherein the logger unload program reads contents of the log file (40) and contents of the uncompleted transaction file;
wherein the logger unload program determines that the second transaction from the uncompleted transaction file corresponds to the completion record for the second transaction from the log file (40); and
wherein the logger unload program writes the completed second transaction to the completed transaction file in response to the logger unload program determining that the second transaction from the uncompleted transaction file corresponds to the completion record for the second transaction from the log file (40).

15. The method of claim 14, further comprising:
providing a transaction time limit for transactions, wherein the transaction time limit indicates a time by which the transaction must complete to be valid;
providing a current time;
writing a third transaction to the log file (40), wherein the third transaction includes a transaction start time, wherein the transaction start time indicates a time at which the third transaction began;
the logger unload program reading contents of the log file (40) and contents of the uncompleted transaction file;
the logger unload program calculating a transaction elapsed time for the third transaction by subtracting the current time from the transaction start time;
the logger unload program comparing the transaction elapsed time of the third transaction to the transaction time limit; and
the logger unload program writing the third transaction to an aborted transaction file when the transaction elapsed time of the third transaction has exceeded the transaction time limit.

16. A system comprising:
a processing unit (12);
a system memory (20) coupled to the processing unit (12);
a data storage (30) coupled to the processing unit (12);
wherein the system memory (20) stores program instructions, wherein the program instructions are executable by the processing unit to:
write a first transaction to a log file (40) in the data storage (20);
write a completion record for the first transaction to the log file (40), wherein the completion record indicates that the first transaction has completed;
write a second transaction to the log file (40);
read the completed first transaction from the log file (40);
read the second transaction from the log file (40);
write the completed first transaction to a completed transaction file in the data storage (30);
write the second transaction to an uncompleted transaction file in the data storage (30);
complete the second transaction;
write a completion record for the second transaction to the log file (40), wherein the completion record indicates that the second transaction has completed;
**characterized in that** the program instructions are further executable to:
read contents of the log file (40) and contents of the uncompleted transaction file, wherein the contents of the log file (40) include the completion record for the second transaction, and wherein the contents of the uncompleted transaction file include the second transaction;
determine that the second transaction from the uncompleted transaction file corresponds to the completion record for the second transaction from the log file (40); and
write the completed second transaction to the completed transaction file in response to determining that the second transaction from the uncompleted transaction file corresponds to the completion record for the second transaction from the log file (40).

17. The system of claim 16, further comprising:
a system clock (15) coupled to the processing unit (12);
wherein the program instructions are further executable to:
providing a transaction time limit for transactions, wherein the transaction time limit indicates a time by which the transaction must complete to be valid;
determine a current time by reading the system clock (15);
write a third transaction to the log file (40), wherein the third transaction includes a transaction start time, wherein the transaction start time indicates a time at which the third transaction began;
read contents of the log file (40) and contents of the uncompleted transaction file;
calculate a transaction elapsed time for the third transaction by subtracting the current time from the transaction start time;
compare the transaction elapsed time of the third transaction to the transaction time limit; and
write the third transaction to an aborted transaction file when the transaction elapsed time of the third transaction has exceeded the transaction time limit.

18. The system of claim 16, wherein each transaction comprises at least one transaction record, and wherein a transaction record comprises at least one field.

19. The system of claim 18, wherein each transaction record further comprises an identifier field, and wherein the identifier field is unique to the transaction, such that the identifier field uniquely identifies a transaction record as belonging to a particular transaction, and such that the identifier field is used to distinguish the particular transaction from other transactions.

20. The system of claim 19, wherein each transaction record further comprises a time field, and wherein the time field comprises a time stamp.

21. The system of claim 20, wherein the identifier field is the time field, and wherein the time stamp is a time at which the transaction was started.

22. The system of claim 21, wherein one transaction record is a completion record comprising a time field and a transaction complete field, wherein the transaction complete field includes information identifying a record as a completion record.

23. The system of claim 16, wherein each transaction includes a program identifier, wherein the program identifier is a unique piece of data that indicates which program of a plurality of programs generated the transaction.

24. The system of claim 23, wherein a logger interface program is configured to accept transactions generated by programs and send the transactions to a system logger.

25. The system of claim 24, wherein the system logger is a component of an operating system.

26. The system of claim 24,
wherein the program instructions further comprise a first application program and a second application program;
wherein the logger interface program is executable to receive the first transaction from a first program;
wherein the logger interface program is executable to send the first transaction to the system logger;
wherein the logger interface program is executable to receive the second transaction from a second program;
wherein the logger interface program is executable to send the second transaction to the system logger;
wherein the system logger is executable to write the first transaction to the log file (40) and write the second transaction to the log file (40).

27. The system of claim 16, wherein the system is a mainframe computer system.

28. A carrier medium comprising program instructions, wherein the program instructions are executable by a machine to implement:
writing a first transaction to a log file (40);
completing the first transaction;
writing a completion record for the first transaction to the log file (40), wherein the completion record indicates that the first transaction has completed;
writing a second transaction to the log file (40);
reading the completed first transaction from the log file (40);
reading the second transaction from the log file (40);
writing the completed first transaction to a completed transaction file;
writing the second transaction to an uncompleted transaction file;
complete the second transaction;
write a completion record for the second transaction to the log file (40), wherein the completion record indicates that the second transaction has completed;
**characterized in that** the program instructions are further executable to:
read contents of the log file (40) and contents of the uncompleted transaction file, wherein the contents of the log file (40) include the completion record for the second transaction, and wherein the contents of the uncompleted transaction file include the second transaction;
determine that the second transaction from the uncompleted transaction file corresponds to the completion record for the second transaction from the log file (40); and
write the completed second transaction to the completed transaction file in response to determining that the second transaction from the uncompleted transaction file corresponds to the completion record for the second transaction from the log file (40).

29. The carrier medium of claim 28, wherein the program instructions are further executable by the machine to implement:
providing a transaction time limit for transactions, wherein the transaction time limit indicates a time by which the transaction must complete to be valid;
providing a current time;
writing a third transaction to the log file (40), wherein the third transaction includes a transaction start time, wherein the transaction start time indicates a time at which the third transaction began;
reading contents of the log file (40) and contents of the uncompleted transaction file;
calculating a transaction elapsed time for the third transaction by subtracting the current time from the transaction start time;
comparing the transaction elapsed time of the third transaction to the transaction time limit; and
writing the third transaction to an aborted transaction file when the transaction elapsed time of the third transaction has exceeded the transaction time limit.

30. The carrier medium of claim 28, wherein each transaction comprises at least one transaction record, and wherein a transaction record comprises at least one field.

31. The carrier medium of claim 30, wherein each transaction record further comprises an identifier field, and wherein the identifier field is unique to the transaction, such that the identifier field uniquely identifies a transaction record as belonging to a particular transaction, and such that the identifier field is used to distinguish the particular transaction from other transactions.

32. The carrier medium of claim 31, wherein each transaction record further comprises a time field, wherein the time field comprises a time stamp.

33. The carrier medium of claim 32, wherein the identifier field is the time field, wherein the time stamp is a time at which the transaction was started.

34. The carrier medium of claim 33, wherein one transaction record is a completion record comprising a time field and a transaction complete field, wherein the transaction complete field includes information identifying a record as a completion record.

35. The carrier medium of claim 28, wherein each transaction includes a program identifier, wherein the program identifier is a unique piece of data that indicates which program of a plurality of programs generated the transaction.

36. The carrier medium of claim 35, wherein a logger interface program is configured to accept transactions generated by programs and send the transactions to a system logger.

37. The carrier medium of claim 36, wherein the system logger is a component of an operating system.

38. The carrier medium of claim 36, wherein the program instructions are further executable by the machine to implement:
the logger interface program receiving the first transaction from a first program;
the logger interface program sending the first transaction to the system logger;
the logger interface program receiving the second transaction from a second program;
the logger interface program sending the second transaction to the system logger.

39. The carrier medium of claim 28, wherein the machine is a mainframe computer system.

40. The carrier medium of claim 28,
wherein reading transactions from the log file (40) comprises a logger unload program executable for reading transactions from the log file (40);
wherein writing the completed first transaction to a completed transaction file comprises the logger unload program executable for writing the completed first transaction to a completed transaction file; and
wherein writing the second transaction to an uncompleted transaction file comprises the logger unload program executable for writing the second transaction to an uncompleted transaction file.

41. The carrier medium of claim 40,
wherein the logger unload program reads contents of the log file (40) and contents of the uncompleted transaction file;
wherein the logger unload program determines that the second transaction from the uncompleted transaction file corresponds to the completion record for the second transaction from the log file (40); and
wherein the logger unload program writes the completed second transaction to the completed transaction file in response to the logger unload program determining that the second transaction from the uncompleted transaction file corresponds to the completion record for the second transaction from the log file (40).

42. The carrier medium of claim 41, wherein the program instructions are further executable by the machine to implement:
providing a transaction time limit for transactions, wherein the transaction time limit indicates a time by which the transaction must complete to be valid;
providing a current time;
writing a third transaction to the log file (40), wherein the third transaction includes a transaction start time, wherein the transaction start time indicates a time at which the third transaction began;
the logger unload program reading contents of the log file (40) and contents of the uncompleted transaction file;
the logger unload program calculating a transaction elapsed time for the third transaction by subtracting the current time from the transaction start time;
the logger unload program comparing the transaction elapsed time of the third transaction to the transaction time limit; and
the logger unload program writing the third transaction to an aborted transaction file when the transaction elapsed time of the third transaction has exceeded the transaction time limit.

43. The carrier medium of claim 28, wherein the carrier medium is a memory medium.

## Patentansprüche

1. Verfahren umfassend:
Schreiben einer ersten Transaktion in eine Protokolldatei (40);
Fertigstellen der ersten Transaktion;
Schreiben einer Fertigstellungsaufzeichnung für die erste Transaktion in die Protokolldatei (40), wobei die Fertigstellungsaufzeichnung angibt, dass die erste Transaktion fertig gestellt wurde;
Schreiben einer zweiten Transaktion in die Protokolldatei (40);
Lesen der fertig gestellten ersten Transaktion aus der Protokolldatei (40);
Lesen der zweiten Transaktion aus der Protokolldatei (40);
Schreiben der fertig gestellten ersten Transaktion in eine Datei für fertig gestellte Transaktion;
Schreiben der zweiten Transaktion in eine Datei für nicht fertig gestellte Transaktion;
Fertigstellen der zweiten Transaktion;
Schreiben einer Fertigstellungsaufzeichnung für die zweite Transaktion in die Protokolldatei (40), wobei die Fertigstellungsaufzeichnung angibt, dass die zweite Transaktion fertig gestellt wurde;
**dadurch gekennzeichnet, dass** das Verfahren ferner Folgendes umfasst:
Lesen der Inhalte der Protokolldatei (40) und Inhalte der Datei für nicht fertig gestellte Transaktion, wobei die Inhalte der Protokolldatei (40) die Fertigstellungsaufzeichnung für die zweite Transaktion umfassen und wobei der Inhalt der Datei für nicht fertig gestellte Transaktion die zweite Transaktion umfasst;
Bestimmen, dass die zweite Transaktion der Datei für nicht fertig gestellte Transaktion der Fertigstellungsaufzeichnung für die zweite Transaktion aus der Protokolldatei (40) entspricht;
Schreiben der fertig gestellten Transaktion in die Datei für fertig gestellte Transaktion als Reaktion auf das Bestimmen, dass die zweite Transaktion der Datei für nicht fertig gestellte Transaktion der Fertigstellungsaufzeichnung der zweiten Transaktion der Protokolldatei (40) entspricht.

2. Verfahren nach Anspruch 1, ferner umfassend:
Bereitstellen eines Transaktionszeitlimits für Transaktionen, wobei das Transaktionszeitlimit eine Zeit angibt, zu welcher die Transaktion fertig gestellt sein muss, um gültig zu sein;
Bereitstellen einer aktuellen Zeit;
Schreiben einer dritten Transaktion in die Protokolldatei (40), wobei die dritte Transaktion eine Transaktionsanfangszeit umfasst, wobei die Transaktionsanfangszeit die Zeit angibt, zu der die dritte Transaktion begann;
Lesen der Inhalte der Protokolldatei (40) und Inhalte der Datei für nicht fertig gestellte Transaktion;
Berechnen einer verstrichenen Transaktionszeit der dritten Transaktion durch Subtrahieren der aktuellen Zeit von der Transaktionsanfangszeit;
Vergleichen der verstrichenen Transaktionszeit der dritten Transaktion mit dem Transaktionszeitlimit; und
Schreiben der dritten Transaktion in eine Datei für abgebrochene Transaktion, wenn die verstrichene Transaktionszeit das Transaktionszeitlimit überschritten hat.

3. Verfahren nach Anspruch 1, wobei jede Transaktion mindestens eine Transaktionsaufzeichnung umfasst, und wobei eine Transaktionsaufzeichnung mindestens ein Feld umfasst.

4. Verfahren nach Anspruch 3, wobei jede Transaktionsaufzeichnung ferner ein Identifikatorfeld umfasst,
wobei das Identifikatorfeld für die Transaktion einzigartig ist, so dass das Identifikatorfeld die Transaktionsaufzeichnung eindeutig als zu einer bestimmten Transaktion gehörend identifiziert, und derart, dass das Identifikatorfeld verwendet wird, um die bestimmte Transaktion von anderen Transaktionen zu unterscheiden.

5. Verfahren nach Anspruch 4, wobei jede Transaktionsaufzeichnung ferner ein Zeitfeld umfasst, wobei das Zeitfeld einen Zeitstempel umfasst.

6. Verfahren nach Anspruch 5, wobei das Identifikatorfeld das Zeitfeld ist, wobei der Zeitstempel eine Zeit ist, zu der die Transaktion begonnen wurde.

7. Verfahren nach Anspruch 6, wobei eine Transaktionsaufzeichnung eine Fertigstellungsaufzeichnung ist, die ein Zeitfeld umfasst und ein Feld für fertig gestellte Transaktion, wobei das Feld für fertig gestellte Transaktion Information enthält, die eine Aufzeichnung als eine Fertigstellungsaufzeichnung identifiziert.

8. Verfahren nach Anspruch 1, wobei jede Transaktion einen Programmidentifikator umfasst, wobei der Programmidentifikator ein einzigartiger Teil der Datei ist, der angibt, welches Programm einer Vielzahl von Programme die Transaktion erzeugt hat.

9. Verfahren nach Anspruch 8, wobei ein Protokollierungsschnittstellenprogramm konfiguriert ist, um Transaktionen zu akzeptieren, die von Pragrammen erzeugt werden, und um die Transaktionen zu einer Systemprotokollierung zu senden.

10. Verfahren nach Anspruch 9, wobei die Systemprotokollierung ein Bauteil eines Betriebssystems ist.

11. Verfahren nach Anspruch 10, ferner umfassend:
das Protokollierungsschnittstellenprogramm, das die erste Transaktion von einem ersten Programm erhält;
das Protokollierungsschnittstellenprogramm, das die erste Transaktion zu der Systemprotokollierung sendet;
das Protokollierungsschnittstellenprogramm, das die zweite Transaktion von einem zweiten Programm erhält;
das Protokollierungsschnittstellenprogramm, das die zweite Transaktion zu der Systemprotokollierung sendet.

12. Verfahren nach Anspruch 11, wobei das Protokollierungsschnittstellenprogramm durch ein Zentraleinheit-Computersystem ausgeführt werden kann.

13. Verfahren nach Anspruch 1, wobei das Lesen der Transaktionen aus der Protokolldatei (40) ferner ein Protokollierungsentladeprogramm umfasst, das Transaktionen aus der Protokolldatei (40) liest;
wobei das Schreiben der fertig gestellten ersten Transaktion in eine Datei für fertig gestellte Transaktion ferner das Schreiben durch das Protokollierungsentladeprogramm der fertig gestellten ersten Transaktion in eine Datei für fertig gestellte Transaktion umfasst; und
wobei das Schreiben der zweiten Transaktion in eine Datei für nicht fertig gestellte Transaktion ferner das Schreiben durch das Protokollierungsentladeprogramm der zweiten Transaktion in eine zweite Datei für nicht fertig gestellte Transaktion umfasst.

14. Verfahren nach Anspruch 13:
wobei das Protokollierungsentladeprogramm die Inhalte der Protokolldatei (40) und Inhalte der Datei für nicht fertig gestellte Transaktion liest;
wobei das Protokollierungsentladeprogramm bestimmt, dass die zweite Transaktion der Datei für nicht fertig gestellte Transaktion der Fertigstellungsaufzeichnung für die zweite Transaktion der Protokolldatei (40) entspricht; und
wobei das Protokollierungsentladeprogramm die fertig gestellte zweite Transaktion in die Datei für fertig gestellte Transaktion als Reaktion auf das Bestimmen durch das Registrierungsentladeprogramm schreibt, dass die zweite Transaktion der Datei für nicht fertig gestellte Transaktion der Fertigstellungsaufzeichnung für die zweite Transaktion der Protokolldatei (40) entspricht.

15. Verfahren nach Anspruch 14, ferner umfassend:
Bereitstellen eines Transaktionszeitlimits für Transaktionen, wobei das Transaktionszeitlimit eine Zeit angibt, zu welcher die Transaktion fertig gestellt sein muss, um gültig zu sein;
Bereitstellen einer aktuellen Zeit;
Schreiben einer dritten Transaktion in die Protokolldatei (40), wobei die dritte Transaktion eine Transaktionsanfangszeit umfasst, wobei die Transaktionsanfangszeit eine Zeit angibt, zu der die dritte Transaktion begann;
Lesen durch das Registrierungsentladeprogramm der Inhalte der Protokolldatei (40) und Inhalte der Datei für nicht fertig gestellte Transaktion;
Berechnen durch das Protokollierungsentladeprogramm einer verstrichenen Transaktionszeit der dritten Transaktion durch Subtrahieren der aktuellen Zeit von der Transaktionsanfangszeit;
Vergleichen durch das Protokollierungsentladeprogramm der verstrichenen Transaktionszeit der dritten Transaktion mit dem Transaktionszeitlimit; und
Schreiben durch das Protokollierungsentladeprogramm der dritten Transaktion in eine Datei für abgebrochene Transaktion, wenn die verstrichene Transaktionszeit der dritten Transaktion das Transaktionszeitlimit überschritten hat.

16. System umfassend:
eine Rechnereinheit (12);
einen Systemspeicher (20) gekoppelt mit der Rechnereinheit (12);
einen Datenspeicher (30) gekoppelt mit der Rechnereinheit (12);
wobei der Systemspeicher (20) Programmanweisungen speichert, wobei die Programmanweisungen durch die Rechnereinheit ausführbar sind, um:
eine erste Transaktion in eine Protokolldatei (40) in den Datenspeicher (20) zu schreiben;
eine Fertigstellungsaufzeichnung für die erste Transaktion in die Protokolldatei (40) zu schreiben, wobei die Fertigstellungsaufzeichnung angibt, dass die erste Transaktion fertig gestellt wurde; Schreiben einer zweiten Transaktion in die Protokolldatei (40);
Lesen der fertig gestellten ersten Transaktion aus der Protokolldatei (40);
Lesen der zweiten Transaktion aus der Protokolldatei (40);
Schreiben der fertig gestellten ersten Transaktion in eine Datei für fertig gestellte Transaktion in dem Datenspeicher (30);
Schreiben der zweiten Transaktion in eine Datei für nicht fertig gestellte Transaktion in dem Datenspeicher (30);
Fertigstellen der zweiten Transaktion;
Schreiben einer Fertigstellungsaufzeichnung für die zweite Transaktion in die Protokolldatei (40), wobei die Fertigstellungsaufzeichnung angibt, dass die zweite Transaktion fertig gestellt wurde;
**dadurch gekennzeichnet, dass** die Programmanweisungen ferner ausführbar sind, um:
Inhalte der Protokolldatei (40) und Inhalte der Datei für nicht fertig gestellte Transaktion zu lesen, wobei die Inhalte der Protokolldatei (40) die Fertigstellungsaufzeichnung für die zweite Transaktion umfassen, und wobei die Inhalte der Datei für nicht fertig gestellte Transaktion die zweite Transaktion umfassen;
zu bestimmen, dass die zweite Transaktion der Datei für nicht fertig gestellte Transaktion der Fertigstellungsaufzeichnung für die zweite Transaktion der Protokolldatei (40) entspricht; und
die fertig gestellte zweite Transaktion in die Datei für fertig gestellte Transaktion als Reaktion auf das Bestimmen zu schreiben, dass die zweite Transaktion der Datei für nicht fertig gestellte Transaktion der Fertigstellungsaufzeichnung für die zweite Transaktion der Protokolldatei (40) entspricht.

17. System nach Anspruch 16, ferner umfassend:
einen Systemtaktgeber (15), der mit der Rechnereinheit (12) gekoppelt ist;
wobei die Programmanweisungen ferner ausführbar sind, um
ein Transaktionszeitlimit für Transaktionen bereitzustellen, wobei das Transaktionszeitlimit eine Zeit angibt, zu welcher die Transaktion fertig gestellt sein muss, um gültig zu sein;
eine aktuelle Zeit durch Lesen des Systemtaktgebers (15) zu bestimmen;
eine dritte Transaktion in die Protokolldatei (40) zu schreiben, wobei die dritte Transaktion eine Transaktionsanfangszeit umfasst, wobei die Transaktionsanfangszeit eine Zeit angibt, zu der die dritte Transaktion begann;
Inhalte der Protokolldatei (40) und Inhalte der Datei für nicht fertig gestellte Transaktion zu lesen;
eine verstrichene Transaktionsanfangszeit der dritten Transaktion zu berechnen, indem die aktuelle Zeit von der Transaktionsanfangszeit subtrahiert wird;.
die verstrichene Transaktionsanfangszeit der dritten Transaktion mit dem Transaktionszeitlimit zu vergleichen; und
die dritte Transaktion in eine Datei für abgebrochene Transaktion zu schreiben, wenn die verstrichene Transaktionsanfangszeit der dritten Transaktion das Transaktionszeitlimit überschritten hat.

18. System nach Anspruch 16, wobei jede Transaktion mindestens eine Transaktionsaufzeichnung umfasst, und wobei eine Transaktionsaufzeichnung mindestens ein Feld umfasst.

19. System nach Anspruch 18, wobei jede Transaktionsaufzeichnung ferner ein Identifikatorfeld umfasst, und wobei das Identifikatorfeld für die Transaktion einzigartig ist, so dass das Identifikatorfeld eine Transaktionsaufzeichnung eindeutig als zu einer bestimmten Transaktion gehörend identifiziert, und derart, dass das Identifikatorfeld verwendet wird, um die bestimmte Transaktion von anderen Transaktion zu unterscheiden.

20. System nach Anspruch 19, wobei jede Transaktionsaufzeichnung ferner ein Zeitfeld umfasst, und wobei das Zeitfeld einen Zeitstempel umfasst.

21. System nach Anspruch 20, wobei das Identifikatorfeld das Zeitfeld ist, und wobei der Zeitstempel eine Zeit ist, zu der die Transaktion gestartet wurde.

22. System nach Anspruch 21, wobei eine Transaktionsaufzeichnung eine Fertigstellungsaufzeichnung ist, die ein Zeitfeld und ein Transaktionsfertigstellungsfeld umfasst, wobei das Transaktionsfertigstellungsfeld Information enthält, die eine Aufzeichnung als eine Fertigstellungsaufzeichnung identifiziert.

23. System nach Anspruch 16, wobei jede Transaktion einen Programmidentifikator umfasst, wobei der Programmidentifikator ein einzigartiger Teil von Daten ist, der anzeigt, welches Programm einer Vielzahl von Programmen die Transaktion erzeugt hat.

24. System nach Anspruch 23, wobei ein Protokollierungsschnittstellenprogramm konfiguriert ist, um Transaktionen zu akzeptieren, die von Programmen erzeugt werden, und um die Transaktionen zu einer Systemprotokollierung zu senden.

25. System nach Anspruch 24, wobei die Systemprotokollierung ein Bauteil eines Betriebsystems ist.

26. System nach Anspruch 24,
wobei die Programmanweisungen ferner ein erstes Anwendungsprogramm und ein zweites Anwendungsprogramm umfassen;
wobei das Protokollierungsschnittstellenprogramm ausführbar ist, um die erste Transaktion von einem ersten Programm zu erhalten;
wobei das Protokollierungsschnittstellenprogramm ausführbar ist, um die erste Transaktion zu der Systemprotokollierung zu senden;
wobei das Protokollierungsschnittstellenprogramm ausführbar ist, um die zweite Transaktion von einem zweiten Programm zu empfangen;
wobei das Protokollierungsschnittstellenprogramm ausführbar ist, um die zweite Transaktion zu der Systemprotokollierung zu senden;
wobei die Systemprotokollierung ausführbar ist, um die erste Transaktion in die Protokolldatei (40) zu schreiben und die zweite Transaktion in die Protokolldatei (40) zu schreiben.

27. System nach Anspruch 16, wobei das System ein Zentraleinheit-Computersystem ist.

28. Trägermittel, das ein Anweisungsprogramm umfasst, wobei die Programmanweisungen durch eine Maschine ausführbar sind, um Folgendes zu implementieren:
Schreiben einer ersten Transaktion in eine Protokolldatei (40);
Fertigstellen der ersten Transaktion;
Schreiben einer Fertigstellungsaufzeichnung für die erste Transaktion in die Protokolldatei (40), wobei die Fertigstellungsaufzeichnung angibt, dass eine erste Transaktion fertig gestellt wurde;
Schreiben einer zweiten Transaktion in die Protokolldatei (40);
Lesen der fertig gestellten ersten Transaktion aus der Protokolldatei (40);
Lesen der zweiten Transaktion aus der Protokolldatei (40);
Schreiben der fertig gestellten ersten Transaktion in eine Datei für fertig gestellte Transaktion; und Schreiben der zweiten Transaktion in eine Datei für nicht fertig gestellte Transaktion;
Fertigstellen der zweiten Transaktion;
Schreiben einer Fertigstellungsaufzeichnung für die zweite Transaktion in die Protokolldatei (40), wobei die Fertigstellungsaufzeichnung angibt, dass die zweite Transaktion fertig gestellt wurde;
**dadurch gekennzeichnet, dass** die Programmanweisungen ferner ausführbar sind, um:
Inhalte der Protokolldatei (40) und Inhalte der Datei für nicht fertig gestellte Transaktion zu lesen, wobei die Inhalte der Protokolldatei (40) die Fertigstellungsaufzeichnung für die zweite Transaktion umfassen, und wobei die Inhalte der Datei für nicht fertig gestellte Transaktion die zweite Transaktion umfassen;
zu bestimmen, dass die zweite Transaktion der Datei für nicht fertig gestellte Transaktion der Fertigstellungsaufzeichnung für die zweite Transaktion der Protokolldatei (40) entspricht; und
die Datei für fertig gestellte Transaktion als Reaktion auf das Bestimmen zu schreiben, dass die zweite Transaktion der Datei für nicht fertig gestellte Transaktion der Fertigstellungsaufzeichnung für die zweite Transaktion der Protokolldatei (40) entspricht.

29. Trägermittel des Anspruchs 28, wobei die Programmanweisungen ferner durch die Maschine ausführbar sind, um Folgendes zu implementieren:
Bereitstellen eines Transaktionszeitlimits für Transaktionen, wobei das Transaktionszeitlimit eine Zeit angibt, zu welcher die Transaktion fertig gestellt sein muss, um gültig zu sein;
Bereitstellen einer aktuellen Zeit;
Schreiben einer dritten Transaktion in die Protokolldatei (40), wobei die dritte Transaktion eine Transaktionsanfangszeit umfasst, wobei die Transaktionsanfangszeit eine Zeit angibt, zu der die dritte Transaktion begann;
Lesen der Inhalte der Protokolldatei (40) und der Inhalte der Datei für nicht fertig gestellte Transaktion;
Berechnen einer verstrichenen Transaktionszeit der dritten Transaktion durch Subtrahieren der aktuellen Zeit von der Transaktionsanfangszeit;
Vergleichen der verstrichenen Transaktionsanfangszeit der dritten Transaktion mit dem Transaktionsanfangszeitlimit; und
Schreiben der dritten Transaktion in eine Datei für abgebrochene Transaktion, wenn die verstrichene Transaktionszeit der dritten Transaktion das Transaktionszeitlimit überschritten hat.

30. Trägermittel nach Anspruch 28, wobei jede Transaktion mindestens eine Transaktionsaufzeichnung umfasst, und wobei eine Transaktionsaufzeichnung mindestens ein Feld umfasst.

31. Trägermittel nach Anspruch 30, wobei jede Transaktionsaufzeichnung ferner ein Identifikatorfeld umfasst, und wobei das Identifikatorfeld für die Transaktion einzigartig ist, so dass das Identifikatorfeld eine Transaktionsaufzeichnung eindeutig als zu einer bestimmten Transaktion gehörend identifiziert, und derart, dass das Identifikatorfeld verwendet wird, um die bestimmte Transaktion von anderen Transaktionen zu unterscheiden.

32. Trägermittel nach Anspruch 31, wobei jede Transaktionsaufzeichnung ferner ein Zeitfeld umfasst, wobei das Zeitfeld einen Zeitstempel umfasst.

33. Trägermittel nach Anspruch 32, wobei das Identifikatorfeld das Zeitfeld ist, wobei der Zeitstempel eine Zeit ist, zu der die Transaktion gestartet wurde.

34. Trägermittel nach Anspruch 33, wobei eine Transaktionsaufzeichnung eine Fertigstellungsaufzeichnung ist, die ein Zeitfeld und ein Transaktionsfertigstellungsfeld umfasst, wobei die Datei für fertig gestellte Transaktion Information umfasst, die eine Aufzeichnung als eine Fertigstellungsaufzeichnung identifiziert.

35. Trägermittel nach Anspruch 28, wobei jede Transaktion einen Programmidentifikator umfasst, wobei der Programmidentifikator ein einzigartiger Teil von Daten ist, der angibt, welches Programm einer Vielzahl von Programmen die Transaktion erzeugt hat.

36. Trägermittel nach Anspruch 35, wobei ein Protokollierungsschnittstellenprogramm konfiguriert ist, um Transaktionen zu akzeptieren, die von Programmen erzeugt werden, und die Transaktionen zu einer Systemprotokollierung zu senden.

37. Trägermittel nach Anspruch 36, wobei die Systemprotokollierung ein Bauteil eines Betriebsystems ist.

38. Trägermittel nach Anspruch 36, wobei die Programmanweisungen ferner durch die Maschine ausführbar sind, um Folgendes zu implementieren:
Empfangen der ersten Transaktion eines ersten Programms durch das Protokollierungsschnittstellenprogramm;
Senden der ersten Transaktion zu der Systemprotokollierung durch das Protokollierungsschnittstellenprogramm;
Empfangen der zweiten Transaktion von einem zweiten Programm durch das Protokollierungsschnittstellenprogramm;
Senden der zweiten Transaktion zu der Systemprotokollierung durch das Protokollierungsschnittstellenprogramm.

39. Trägermittel nach Anspruch 28, wobei die Maschine ein Zentraleinheit-Computersystem ist.

40. Trägermittel nach Anspruch 28,
wobei das Lesen von Transaktionen aus der Protokolldatei (40) ein Protokollierungsentladeprogramm umfasst, das zum Lesen von Transaktionen aus der Protokolldatei (40) ausführbar ist;
wobei das Schreiben der fertig gestellten ersten Transaktion in eine Datei für fertig gestellte Transaktion das Protokollierungsentladeprogramm umfasst, das ausführbar ist, um die fertig gestellte erste Transaktion in eine Datei für fertig gestellte Transaktion zu schreiben; und
wobei das Schreiben der zweiten Transaktion in eine Datei für nicht fertig gestellte Transaktion das Protokollierungsentladeprogramm umfasst, das ausführbar ist, um die zweite Transaktion in eine Datei für nicht fertig gestellte Transaktion zu schreiben.

41. Trägermittel nach Anspruch 40,
wobei das Protokollierungsentladeprogramm die Inhalte der Protokolldatei (40) und die Inhalte der Datei für nicht fertig gestellte Transaktion liest;
wobei das Protokollierungsentladeprogramm bestimmt, dass die zweite Transaktion der Datei für nicht fertig gestellte Transaktion der Fertigstellungsaufzeichnung der zweiten Transaktion der Protokolldatei (40) entspricht; und
wobei das Protokollierungsentladeprogramm die fertig gestellte Transaktion in die Datei für fertig gestellte Transaktion als Reaktion auf das Bestimmen durch das Protokollierungsentladeprogramm schreibt, dass die zweite Transaktion der Datei für nicht fertig gestellte Transaktion der Fertigstellungsaufzeichnung der zweiten Transaktion der Protokolldatei (40) entspricht.

42. Trägermittel nach Anspruch 41, wobei die Programmanweisungen ferner durch die Maschine ausführbar sind, um Folgendes zu implementieren:
Bereitstellen eines Transaktionszeitlimits für Transaktionen, wobei das Transaktionszeitlimit eine Zeit angibt, zu der die Transaktion fertig gestellt sein muss, um gültig zu sein;
Bereitstellen einer aktuellen Zeit;
Schreiben einer dritten Transaktion in die Protokolldatei (40), wobei die dritte Transaktion eine Transaktionsanfangszeit umfasst, wobei die Transaktionsanfangszeit eine Zeit angibt, zu der die dritte Transaktion begann;
Lesen der Inhalte der Protokolldatei (40) und Inhalte der Datei für nicht fertig gestellte Transaktion durch das Registrierungsentladeprogramm;
Berechnen durch das Protokollierungsentladeprogramm einer verstrichenen Transaktionszeit der dritten Transaktion durch Subtrahieren der aktuellen Zeit von der Transaktionsanfangszeit;
Vergleichen durch das Protokollierungsentladeprogramm der verstrichenen Transaktionszeit der dritten Transaktion mit dem Transaktionszeitlimit; und
Schreiben durch das Protokollierungsentladeprogramm der dritten Transaktion in eine Datei für abgebrochene Transaktion, wenn die verstrichene Transaktionszeit der dritten Transaktion das Transaktionszeitlimit überschritten hat.

43. Trägermittel nach Anspruch 28, wobei das Trägermittel ein Speichermittel ist.

## Revendications

1. Procédé comprenant les étapes consistant à :
écrire une première transaction dans un fichier de consignation (40) ;
achever la première transaction ;
écrire un enregistrement d'exécution pour la première transaction dans le fichier de consignation (40), l'enregistrement d'exécution indiquant que la première transaction est achevée ;
écrire une deuxième transaction dans le fichier de consignation (40) ;
extraire la première transaction achevée du fichier de consignation (40) ;
extraire la deuxième transaction du fichier de consignation (40) ;
écrire la première transaction achevée dans un fichier de transactions achevées ;
écrire la deuxième transaction dans un fichier de transactions inachevées ;
achever la deuxième transaction ;
écrire un enregistrement d'exécution pour la deuxième transaction dans le fichier de consignation (40), l'enregistrement d'exécution indiquant que la deuxième transaction est achevée ;
**caractérisé en ce que** le procédé comprend en outre les étapes consistant à :
lire le contenu du fichier de consignation (40) et le contenu du fichier de transactions inachevées, le contenu du fichier de consignation (40) incluant l'enregistrement d'exécution pour la deuxième transaction, et le contenu du fichier de transactions inachevées incluant la deuxième transaction ;
déterminer que la deuxième transaction du fichier de transactions inachevées correspond à l'enregistrement d'exécution pour la deuxième transaction du fichier de consignation (40) ; et
écrire la deuxième transaction achevée dans le fichier de transactions achevées en réponse à la détermination du fait que la deuxième transaction du fichier de transactions inachevées correspond à l'enregistrement d'exécution pour la deuxième transaction du fichier de consignation (40).

2. Procédé selon la revendication 1, comprenant en outre les étapes consistant à :
donner une limite de temps de transaction pour les transactions, la limite de temps de transaction indiquant un temps au bout duquel la transaction doit être achevée pour être valide ;
donner une heure actuelle ;
écrire une troisième transaction dans le fichier de consignation (40), la troisième transaction incluant une heure de début de transaction, l'heure de début de transaction indiquant l'heure à laquelle la troisième transaction a débuté ;
lire le contenu du fichier de consignation (40) et le contenu du fichier de transactions inachevées ;
calculer un temps de transaction écoulé pour la troisième transaction en soustrayant l'heure actuelle de l'heure de début de transaction ;
comparer le temps de transaction écoulé de la troisième transaction avec la limite de temps de transaction ; et
écrire la troisième transaction dans un fichier de transactions arrêtées lorsque le temps de transaction écoulé de la troisième transaction a dépassé la limite de temps de transaction.

3. Procédé selon la revendication 1, dans lequel chaque transaction comprend au moins un enregistrement de transaction, et dans lequel un enregistrement de transaction comprend au moins un champ.

4. Procédé selon la revendication 3, dans lequel chaque enregistrement de transaction comprend en outre un champ d'identification, dans lequel le champ d'identification est propre à la transaction, de sorte que le champ d'identification identifie de façon propre un enregistrement de transaction comme appartenant à une transaction particulière, et de sorte que le champ d'identification est utilisé pour distinguer cette transaction particulière des autres transactions.

5. Procédé selon la revendication 4, dans lequel chaque enregistrement de transaction comprend en outre un champ temporel, le champ temporel comprenant un horodatage.

6. Procédé selon la revendication 5, dans lequel le champ d'identification est le champ temporel, l'horodatage étant une heure à laquelle la transaction a commencé.

7. Procédé selon la revendication 6, dans lequel un enregistrement de transaction est un enregistrement d'exécution comprenant un champ temporel et un champ de transaction achevée, le champ de transaction achevée incluant une information identifiant un enregistrement comme enregistrement d'exécution.

8. Procédé selon la revendication 1, dans lequel chaque transaction inclut un identificateur de programme, l'identificateur de programme étant une donnée unique qui indique quel programme, parmi une pluralité de programmes, a généré la transaction.

9. Procédé selon la revendication 8, dans lequel un programme d'interface de consignateur est configuré pour accepter les transactions générées par des programmes et transmettre les transactions à un consignateur du système.

10. Procédé selon la revendication 9, dans lequel le consignateur du système est un composant d'un système d'exploitation.

11. Procédé selon la revendication 10, comprenant en outre :
la réception, par le programme d'interface de consignateur, de la première transaction en provenance d'un premier programme ;
la transmission, par le programme d'interface de consignateur, de la première transaction au consignateur du système ;
la réception, par le programme d'interface de consignateur, de la deuxième transaction en provenance d'un deuxième programme ;
la transmission, par le programme d'interface de consignateur, de la deuxième transaction au consignateur du système.

12. Procédé selon la revendication 11, dans lequel le programme d'interface de consignateur est exécutable par un système informatique central.

13. Procédé selon la revendication 1,
dans lequel l'extraction de transactions du fichier de consignation (40) comprend en outre le fait qu'un programme de mémorisation de consignateur extrait les transactions du fichier de consignation (40) ;
dans lequel l'écriture de la première transaction achevée dans un fichier de transactions achevées comprend en outre le fait que le programme de mémorisation de consignateur écrit la première transaction achevée dans un fichier de transactions achevées ; et
dans lequel l'écriture de la deuxième transaction dans un fichier de transactions inachevées comprend en outre le fait que le programme de mémorisation de consignateur écrit la deuxième transaction dans un fichier de transactions inachevées.

14. Procédé selon la revendication 13,
dans lequel le programme de mémorisation de consignateur lit le contenu du fichier de consignation (40) et le contenu du fichier de transactions inachevées ;
dans lequel le programme de mémorisation de consignateur détermine que la deuxième transaction du fichier de transactions inachevées correspond à l'enregistrement d'exécution pour la deuxième transaction du fichier de consignation (40) ; et
dans lequel le programme de mémorisation de consignateur écrit la deuxième transaction achevée dans le fichier de transactions achevées en réponse à la détermination, par le programme de mémorisation de consignateur, du fait que la deuxième transaction du fichier de transactions inachevées correspond à l'enregistrement d'exécution pour la deuxième transaction du fichier de consignation (40).

15. Procédé selon la revendication 14, comprenant en outre les opérations consistant à :
donner une limite de temps de transaction pour les transactions, la limite de temps de transaction indiquant un temps au bout duquel la transaction doit être achevée pour être valide ;
donner une heure actuelle ;
écrire une troisième transaction dans le fichier de consignation (40), la troisième transaction incluant une heure de début de transaction, l'heure de début de transaction indiquant l'heure à laquelle la troisième transaction a débuté ;
la lecture, par le programme de mémorisation de consignateur, du contenu du fichier de consignation (40) et du contenu du fichier de transactions inachevées ;
le calcul, par le programme de mémorisation de consignateur, d'un temps de transaction écoulé pour la troisième transaction en soustrayant l'heure actuelle de l'heure de début de transaction ;
la comparaison, par le programme de mémorisation de consignateur, du temps de transaction écoulé de la troisième transaction avec la limite de temps de transaction ; et
l'écriture, par le programme de mémorisation de consignateur, de la troisième transaction dans un fichier de transactions arrêtées lorsque le temps de transaction écoulé de la troisième transaction a dépassé la limite de temps de transaction.

16. Système comprenant :
une unité de traitement (12) ;
une mémoire (20) de système couplée à l'unité de traitement (12) ;
une mémoire de données (30) couplée à l'unité de traitement (12) ;
dans lequel la mémoire (20) de système stocke des instructions de programme, les instructions de programme étant exécutables par l'unité de traitement pour :
écrire une première transaction dans un fichier de consignation (40) présent dans la mémoire de données (20) ;
écrire un enregistrement d'exécution pour la première transaction dans le fichier de consignation (40), l'enregistrement d'exécution indiquant que la première transaction est achevée ;
écrire une deuxième transaction dans le fichier de consignation (40) ;
extraire la première transaction achevée du fichier de consignation (40) ;
extraire la deuxième transaction du fichier de consignation (40) ;
écrire la première transaction achevée dans un fichier de transactions achevées présent dans la mémoire de données (30) ;
écrire la deuxième transaction dans un fichier de transactions inachevées présent dans la mémoire de données (30) ;
achever la deuxième transaction ;
écrire un enregistrement d'exécution pour la deuxième transaction dans le fichier de consignation (40), l'enregistrement d'exécution indiquant que la deuxième transaction est achevée ;
**caractérisé en ce que** les instructions de programme sont en outre exécutables pour :
lire le contenu du fichier de consignation (40) et le contenu du fichier de transactions inachevées, le contenu du fichier de consignation (40) incluant l'enregistrement d'exécution pour la deuxième transaction, et le contenu du fichier de transactions inachevées incluant la deuxième transaction ;
déterminer que la deuxième transaction du fichier de transactions inachevées correspond à l'enregistrement d'exécution pour la deuxième transaction du fichier de consignation (40) ; et
écrire la deuxième transaction achevée dans le fichier de transactions achevées en réponse à la détermination du fait que la deuxième transaction du fichier de transactions inachevées correspond à l'enregistrement d'exécution pour la deuxième transaction du fichier de consignation (40).

17. Système selon la revendication 16, comprenant en outre :
une horloge (15) de système couplée à l'unité de traitement (12) ;
dans lequel les instructions de programme sont en outre exécutables pour :
donner une limite de temps de transaction pour les transactions, la limite de temps de transaction indiquant un temps au bout duquel la transaction doit être achevée pour être valide ;
déterminer une heure actuelle en lisant l'horloge (15) de système ;
écrire une troisième transaction dans le fichier de consignation (40), la troisième transaction incluant une heure de début de transaction, l'heure de début de transaction indiquant l'heure à laquelle la troisième transaction a débuté ;
lire le contenu du fichier de consignation (40) et le contenu du fichier de transactions inachevées ;
calculer un temps de transaction écoulé pour la troisième transaction en soustrayant l'heure actuelle de l'heure de début de transaction ;
comparer le temps de transaction écoulé de la troisième transaction avec la limite de temps de transaction ; et
écrire la troisième transaction dans un fichier de transactions arrêtées lorsque le temps de transaction écoulé de la troisième transaction a dépassé la limite de temps de transaction.

18. Système selon la revendication 16, dans lequel chaque transaction comprend au moins un enregistrement de transaction, et dans lequel un enregistrement de transaction comprend au moins un champ.

19. Système selon la revendication 18, dans lequel chaque enregistrement de transaction comprend en outre un champ d'identification, et dans lequel le champ d'identification est propre à la transaction, de sorte que le champ d'identification identifie de façon propre un enregistrement de transaction comme appartenant à une transaction particulière, et de sorte que le champ d'identification est utilisé pour distinguer cette transaction particulière des autres transactions.

20. Système selon la revendication 19, dans lequel chaque enregistrement de transaction comprend en outre un champ temporel, le champ temporel comprenant un horodatage.

21. Système selon la revendication 20, dans lequel le champ d'identification est le champ temporel, l'horodatage étant une heure à laquelle la transaction a commencé.

22. Système selon la revendication 21, dans lequel un enregistrement de transaction est un enregistrement d'exécution comprenant un champ temporel et un champ de transaction achevée, le champ de transaction achevée incluant une information identifiant un enregistrement comme enregistrement d'exécution.

23. Système selon la revendication 16, dans lequel chaque transaction inclut un identificateur de programme, l'identificateur de programme étant une donnée unique qui indique quel programme, parmi une pluralité de programmes, a généré la transaction.

24. Système selon la revendication 23, dans lequel un programme d'interface de consignateur est configuré pour accepter les transactions générées par des programmes et transmettre les transactions à un consignateur du système.

25. Système selon la revendication 24, dans lequel le consignateur du système est un composant d'un système d'exploitation.

26. Système selon la revendication 24,
dans lequel les instructions de programme comprennent en outre un premier programme d'application et un deuxième programme d'application ;
dans lequel le programme d'interface de consignateur est exécutable pour recevoir la première transaction en provenance d'un premier programme ;
dans lequel le programme d'interface de consignateur est exécutable pour transmettre la première transaction au consignateur du système ;
dans lequel le programme d'interface de consignateur est exécutable pour recevoir la deuxième transaction en provenance d'un deuxième programme ;
dans lequel le programme d'interface de consignateur est exécutable pour transmettre la deuxième transaction au consignateur du système ;
dans lequel le consignateur du système est exécutable pour écrire la première transaction dans le fichier de consignation (40) et écrire la deuxième transaction dans le fichier de consignation (40).

27. Système selon la revendication 16, dans lequel le système est un système informatique central.

28. Support d'informations comprenant des instructions de programme, les instructions de programme étant exécutables par une machine pour :
écrire une première transaction dans un fichier de consignation (40) ;
achever la première transaction ;
écrire un enregistrement d'exécution pour la première transaction dans le fichier de consignation (40), l'enregistrement d'exécution indiquant que la première transaction est achevée ;
écrire une deuxième transaction dans le fichier de consignation (40) ;
extraire la première transaction achevée du fichier de consignation (40) ;
extraire la deuxième transaction du fichier de consignation (40) ;
écrire la première transaction achevée dans un fichier de transactions achevées ;
écrire la deuxième transaction dans un fichier de transactions inachevées ;
achever la deuxième transaction ;
écrire un enregistrement d'exécution pour la deuxième transaction dans le fichier de consignation (40), l'enregistrement d'exécution indiquant que la deuxième transaction est achevée ;
**caractérisé en ce que** les instructions de programme sont en outre exécutables pour :
lire le contenu du fichier de consignation (40) et le contenu du fichier de transactions inachevées, le contenu du fichier de consignation (40) incluant l'enregistrement d'exécution pour la deuxième transaction, et le contenu du fichier de transactions inachevées incluant la deuxième transaction ;
déterminer que la deuxième transaction du fichier de transactions inachevées correspond à l'enregistrement d'exécution pour la deuxième transaction du fichier de consignation (40) ; et
écrire la deuxième transaction achevée dans le fichier de transactions achevées en réponse à la détermination du fait que la deuxième transaction du fichier de transactions inachevées correspond à l'enregistrement d'exécution pour la deuxième transaction du fichier de consignation (40).

29. Support d'informations selon la revendication 28, dans lequel les instructions de programme sont en outre exécutables par la machine pour :
donner une limite de temps de transaction pour les transactions, la limite de temps de transaction indiquant un temps au bout duquel la transaction doit être achevée pour être valide ;
donner une heure actuelle ;
écrire une troisième transaction dans le fichier de consignation (40), la troisième transaction incluant une heure de début de transaction, l'heure de début de transaction indiquant l'heure à laquelle la troisième transaction a débuté ;
lire le contenu du fichier de consignation (40) et le contenu du fichier de transactions inachevées ;
calculer un temps de transaction écoulé pour la troisième transaction en soustrayant l'heure actuelle de l'heure de début de transaction ;
comparer le temps de transaction écoulé de la troisième transaction avec la limite de temps de transaction ; et
écrire la troisième transaction dans un fichier de transactions arrêtées lorsque le temps de transaction écoulé de la troisième transaction a dépassé la limite de temps de transaction.

30. Support d'informations selon la revendication 28, dans lequel chaque transaction comprend au moins un enregistrement de transaction, et dans lequel un enregistrement de transaction comprend au moins un champ.

31. Support d'informations selon la revendication 30, dans lequel chaque enregistrement de transaction comprend en outre un champ d'identification, et dans lequel le champ d'identification est propre à la transaction, de sorte que le champ d'identification identifie de façon propre un enregistrement de transaction comme appartenant à une transaction particulière, et de sorte que le champ d'identification est utilisé pour distinguer cette transaction particulière des autres transactions.

32. Support d'informations selon la revendication 31, dans lequel chaque enregistrement de transaction comprend en outre un champ temporel, le champ temporel comprenant un horodatage.

33. Support d'informations selon la revendication 32, dans lequel le champ d'identification est le champ temporel, l'horodatage étant une heure à laquelle la transaction a commencé.

34. Support d'informations selon la revendication 33, dans lequel un enregistrement de transaction est un enregistrement d'exécution comprenant un champ temporel et un champ de transaction achevée, le champ de transaction achevée incluant une information identifiant un enregistrement comme enregistrement d'exécution.

35. Support d'informations selon la revendication 28, dans lequel chaque transaction inclut un identificateur de programme, l'identificateur de programme étant une donnée unique qui indique quel programme, parmi une pluralité de programmes, a généré la transaction.

36. Support d'informations selon la revendication 35, dans lequel un programme d'interface de consignateur est configuré pour accepter les transactions générées par des programmes et transmettre les transactions à un consignateur du système.

37. Support d'informations selon la revendication 36, dans lequel le consignateur du système est un composant d'un système d'exploitation.

38. Support d'informations selon la revendication 36, dans lequel les instructions de programme sont en outre exécutables par la machine pour mettre en oeuvre :
la réception, par le programme d'interface de consignateur, de la première transaction en provenance d'un premier programme ;
la transmission, par le programme d'interface de consignateur, de la première transaction au consignateur du système ;
la réception, par le programme d'interface de consignateur, de la deuxième transaction en provenance d'un deuxième programme ;
la transmission, par le programme d'interface de consignateur, de la deuxième transaction au consignateur du système.

39. Support d'informations selon la revendication 28, dans lequel la machine est un système informatique central.

40. Support d'informations selon la revendication 28,
dans lequel l'extraction de transactions du fichier de consignation (40) comprend un programme de mémorisation de consignateur exécutable pour extraire les transactions du fichier de consignation (40) ;
dans lequel l'écriture de la première transaction achevée dans un fichier de transactions achevées comprend le programme de mémorisation de consignateur exécutable pour écrire la première transaction achevée dans un fichier de transactions achevées ; et
dans lequel l'écriture de la deuxième transaction dans un fichier de transactions inachevées comprend le programme de mémorisation de consignateur exécutable pour écrire la deuxième transaction dans un fichier de transactions inachevées.

41. Support d'informations selon la revendication 40,
dans lequel le programme de mémorisation de consignateur lit le contenu du fichier de consignation (40) et le contenu du fichier de transactions inachevées ;
dans lequel le programme de mémorisation de consignateur détermine que la deuxième transaction du fichier de transactions inachevées correspond à l'enregistrement d'exécution pour la deuxième transaction du fichier de consignation (40) ; et
dans lequel le programme de mémorisation de consignateur écrit la deuxième transaction achevée dans le fichier de transactions achevées en réponse à la détermination, par le programme de mémorisation de consignateur, du fait que la deuxième transaction du fichier de transactions inachevées correspond à l'enregistrement d'exécution pour la deuxième transaction du fichier de consignation (40).

42. Support d'informations selon la revendication 41, dans lequel les instructions de programme sont en outre exécutables par la machine pour :
donner une limite de temps de transaction pour les transactions, la limite de temps de transaction indiquant un temps au bout duquel la transaction doit être achevée pour être valide ;
donner une heure actuelle ;
écrire une troisième transaction dans le fichier de consignation (40), la troisième transaction incluant une heure de début de transaction, l'heure de début de transaction indiquant l'heure à laquelle la troisième transaction a débuté ;
la lecture, par le programme de mémorisation de consignateur, du contenu du fichier de consignation (40) et du contenu du fichier de transactions inachevées ;
le calcul, par le programme de mémorisation de consignateur, d'un temps de transaction écoulé pour la troisième transaction en soustrayant l'heure actuelle de l'heure de début de transaction ;
la comparaison, par le programme de mémorisation de consignateur, du temps de transaction écoulé de la troisième transaction avec la limite de temps de transaction ; et
l'écriture, par le programme de mémorisation de consignateur, de la troisième transaction dans un fichier de transactions arrêtées lorsque le temps de transaction écoulé de la troisième transaction a dépassé la limite de temps de transaction.

43. Support d'informations selon la revendication 28, dans lequel le support d'informations est un support de mémoire.
